# EUROPEAN PATENT SPECIFICATION

(11) **EP 4 229 244 B1**
(45) Date of publication and mention of the grant of the patent: **26.11.2025**
(21) Application number: 21742306.0
(22) Date of filing: 18.06.2021
(51) Int. Cl.: E03B 1/04, A01G 9/02, E03B 3/02, E04C 1/39

(54) **APPARATUS FOR ABSORBING PRECIPITATION WATER AND FOR WATER EVAPORATION**
VORRICHTUNG ZUM SAMMELN UND ABDUNSTEN VON REGENWASSER
APPAREIL D'ABSORPTION D'EAU DE PRECIPITATION ET D'EVAPORATION D'EAU

(30) Priority: 16.10.2020 DE 102020127367
(43) Date of publication of application: 23.08.2023
(73) Proprietor: Universität Stuttgart, 70174 Stuttgart (DE)
(72) Inventor: EISENBARTH, Christina, 70569 Stuttgart (DE); HAASE, Walter, 71157 Hildrizhausen (DE); SOBEK, Werner, 70180 Stuttgart (DE)
(74) Representative: DREISS Patentanwälte PartG mbB
(86) International application number: PCT/EP2021/066687
(87) International publication number: WO 2022/078637

(56) References cited:
- WO-A1-2019/162607
- WO-A1-2020/039172
- DE-A1- 102008 042 069
- DE-A1- 102010 003 953
- VAN DE WOUW P M F ET AL: "Precipitation collection and evapo(transpi)ration of living wall systems: A comparative study between a panel system and a planter box system", BUILDING AND ENVIRONMENT, vol. 126, 3 October 2017 (2017-10-03), pages 221 - 237, XP085275493, ISSN: 0360-1323, DOI: 10.1016/J.BUILDENV.2017.10.002

## Description

The invention relates to an apparatus for absorbing precipitation water from rain events and for water discharge by evaporation. Furthermore, the invention relates to usage of such an apparatus as a construction element in, on or outside of a building or civil engineering structure and as well as to the usage of at least one such apparatus on or in the façade of a new or existing building. Additionally, the invention relates to a (multi-layer) façade system for separating a building interior from an exterior space integrating such apparatus. Finally, the invention relates to a method for operating such apparatus or (multi-layer) façade system in, on or outside a building as well as to a method for controlling and/or regulating an apparatus for absorbing and discharging (precipitation) water. The above-described method may optionally include a software.

In and on buildings, precipitation water is usually drained off in such a way that precipitation water hitting the façade or the roof of a building, that separates the interior from the exterior of the building, is drained, for example in gutters, and fed into the sewage system. This allows drainage of precipitation water, at least under normal weather conditions.

In view of a growing world population and urbanization, as well as increasing climatic impacts on urban structures due to more extreme weather conditions such as heat and heavy rain, there is a need for new possibilities, methods and systems to reduce climate-related risks, especially, to reduce risks of flooding and heat stress.

Ongoing urbanization and re-densification raise the percentage of sealed areas and increase the risk of flooding in urban areas. Due to the densification of urban space, sealed areas with runoff effect are connected more and more to the existing sewage infrastructure. Therefore, the hydraulic capacity of conventional sewage systems is often exceeded in case of heavy rainfall events leading to a risk of flooding with significant material damage and personal injury. The consequences range from selective overflow in road space to severe flooding of entire streets and damages to infrastructures and buildings. Redimensioning the existing sewage systems, if at all possible, would entail a huge amount of work and costs.

Additionally, absorption of solar energy on sealed road and building surfaces in the city leads to a significant increase of air temperature, which will analogously rise in the future due to global warming. So-called "Urban Heat Islands" are generated that, apart from heat stress, pose a health hazard especially to older people.

Both extremes (flooding and heat stress) are further amplified by climate change. According to forecasts, increased heavy rainfall events with intensities far above the prescribed rainfall limits as well as a significant temperature rise with coherent increasing number of hot days are to be expected in the future. Retention areas for decentralized infiltration of rainwater are therefore urgently required particularly in dense urban zones.

To reduce the impact on the sewage system and to improve the microclimate, the so-called "sponge city" concept is promoted internationally, which provides an increasingly decentralized collection, retention and evaporation of precipitation water in the area or in special reservoirs such as trough-trench systems, green roofs, etc. Based on DIN 1986-10 standard, in order to avoid an overloading of the public sewage system, local authorities can limit the maximum rain runoff or prescribe retention options on the site. However, open cavities for decentralized infiltration measures such as trough-trench systems generally consume a large amount of space that cannot be provided in urban, highly dense settlement or inner-city structures. In this case, the surfaces of buildings such as the façades are of particular importance for improving urban rainwater and temperature management.

From prior art, conventional methods for rainwater harvesting through rain gutters and similarly functioning collecting systems in the façade area are also known. These systems have only low efficiency with high material requirements and low water yields due to rebound of rainwater drops on "hard surfaces".

Green façade systems are also known from the state of the art, but are to be considered critical due to their high maintenance intensity caused by a constantly necessary water and nutrient supply. The precipitation water hitting the façade is usually not sufficient to maintain the functionality of green façade systems and the storage capacity of water in vertical applications is significantly lower than in horizontal roof areas. In addition, due to the susceptibility to frost and dew changes as well as mechanical stresses, replanting is often necessary, which is particularly difficult to realize in high-rise buildings, which also argues for their application in the roof area or in the façade of lower buildings.

Spacer fabrics also known as 3D-textiles characterized by two outer layers of preferably knitted fabric that are connected to each other via an intermediate spacer structure of monofilament or multifilament spacer threads are well known from previous state of the art (DE000009016062U1, DE000004239068A1, DE000004317883A1 and following) for their application only in upholstery. Textiles with evaporative cooling effect for clothing sector are known from prior art e.g. from inventions DE102004002287A1, EP000001555489A2, DE102011014383A1, EP000002380534A1, EP000002560591B1, WO002011131718A1 and further. Whereas textile-based building components with evaporative cooling function are not known.

DE 10 2008 042 069 A1 or DE 10 2010 003 953 A1 focus on water collection via three-dimensional textile structures each disclosing an apparatus for obtaining water from fog, with a textile separating element for separating liquid particles contained in an aerosol, wherein the separating element is formed as a three-dimensional textile structure. This allows small amounts of drinking water to be obtained from fog, for example in dry areas. The functions and applications of the above described invention distinguish clearly from the above invented apparatus for absorbing precipitation water and for water evaporation. WO 2019/162607 A1 discloses a greening device for a building with a first fibrous synthetic material (hydrophilic), a flexible wire mesh and a second fibrous synthetic material (hydrophilic).

However, the state-of-the-art shows that there is no multifunctional, mutually beneficial invention for the collection e.g. the retention of precipitation water as well as for the water discharge e.g. an evaporative cooling of the surrounding urban area by means of a textile construction element, which is urgently needed in view of the above-mentioned global climatic challenges.

It is an objective of the invention to reduce the risk of urban heat and flooding as well as the danger of damages and personal injuries caused by these events, especially in urban areas. Acutely needed are concepts for decentralized rainwater retention and water evaporation, which contribute effectively and economically to an improvement of urban rainwater and temperature management to be applied on building surfaces and other civil engineering structures. Furthermore, it is desirable to use precipitation water for intelligent water consumption in, on or outside of buildings in terms of ecological and economical purposes e.g. to reduce water and energy consumption for users in or around the building and/or for interior room conditioning or other building specific uses.

The invention achieves the above-mentioned object by an apparatus according to claim 1.

The invention relates to an apparatus for absorbing precipitation water from rain events, especially from driving rain events with a horizontal velocity component e.g. caused by wind and for water discharge by evaporation.

The apparatus is characterized by at least one textile element for absorbing water (textile element acting as a collector element) from rainwater drops (e.g. having a horizontal velocity component) and/or for discharging water (provided by the public water supply network) and/or precipitation water (absorbed by the apparatus described above) by evaporation (textile element acting as an evaporator element). The textile element is designed as or embodies a three-dimensional textile structure with a first, water-permeable layer (outer layer) and a second, water-guiding layer (inner layer). The first layer and the second layer are connected to one another by means of water-guiding connecting threads. The textile element is fluidically connected to a water discharge conduit and/or to a water supply conduit.

The proposed apparatus can act as an absorber device and as an evaporator device as well, wherein the absorber and evaporator are one identical, multifunctional device (one hybrid integrated system). In case of rain or driving rain events with a horizontal velocity component e.g. caused by wind, deflecting the raindrops from the vertical fall direction, precipitation water can be absorbed, stored and/or discharged by evaporation, if necessary with a time delay, or can be otherwise used in, on or outside the building. When absorbing, precipitation water is led from the first, water-permeable layer along the connecting threads (spacing structure) to the second, water-guiding layer for collection. When discharging water for evaporation and evaporative cooling of the exterior, the water is led from the second, water-guiding layer along the connecting threads (spacing structure) to the first, water-permeable layer.

The absorption, storage and/or targeted, time-delayed discharge of precipitation water, in particular water discharge by evaporation, offer significant economic and ecological advantages in, on or outside a building as well as on a district and urban level.

It is possible to reduce the risk of flooding and heat stress in urban areas, as precipitation water can be absorbed and stored to be then, e.g. with a time delay, discharged into the environment by evaporation or used for other purposes. By absorbing and storing precipitation water, the apparatus acts as a retention surface for rainwater. This allows the drainage of heavy rainfall to be delayed in order to significantly reduce the risk of overloading the sewer system during extreme weather events. By discharging water to the environment via evaporation, the environment can be cooled, thus reducing the effect of heat loads.

A reduction of the building's internal water demand can also be achieved. By collecting precipitation water and making it available as raw water inside, on or outside the building, for example for toilet flushing, washing machine use and/or plant irrigation, water consumption can be significantly reduced.

Furthermore, if the apparatus is installed in or on a high-rise building, the possibility of harvesting raw water in the building skin by the apparatus leads to a reduction of water pump energy consumption. Otherwise water is provided by public water supply network and pumped to the corresponding building floor level. In multi-storey or high-rise buildings (e.g. skyscrapers) in particular, the water collection in the building façade leads to a considerable reduction of the with rising building height exponentially increasing material and pump energy consumption. For the advantageous use of rainwater in, on or outside the building, the apparatus can thus achieve considerable economic savings.

Finally, the collected rainwater by the apparatus may also be purified to drinking water and/or be used for comfort optimization of the interior (temperature and/or humidity regulation, acoustic and sound optimization) and/or for active fire protection measures.

In the context of this invention, evaporation describes the phase transition of water from a liquid aggregate state to a vaporous aggregate state by releasing cooling energy. Thus, absorption is understood as the collection and transfer of a liquid.

The three-dimensional textile structure e.g. spacing structure also known from previous state of the art as a 3D-textile or spacer fabric comprises a double-faced material, whose surfaces are kept at a distance by connecting threads of monofilaments or multifilaments that connect one surface to another.

With regard to the textile element and/or to the three-dimensional textile structure, "textile" does not mean a material-technical restriction to certain materials, but only refers to the macroscopically recognizable technical structure.

Within the scope of the invention, a façade or a façade element is understood to be a building boundary e.g. an outer building hull or an element thereof that delimits a building laterally, i.e. on the building (side) walls and thereby separates a building interior (inside) from an exterior space (outside).

To be differentiated are solid (façade) constructions that are part of the supporting structure e.g. concrete, brick and/or wooden constructions and frame constructions e.g. steel structures as supporting, load bearing and/or load transferring components with an outer non-supporting curtain wall e.g. a multi-layer textile façade system.

The apparatus in combination with or without an insulation layer for thermal and acoustic damping purposes with or without at least one fluid-flow-through layer comprising a functional textile layer with cavities and internal watertight impermeable impregnation for the flow of liquid media with or without an inner layer forming the inner closure facing the building interior to be hold in a preferably modular profile system is specified as a multi-layer preferably hydroactive and/or adaptive façade system.

Within the scope of this invention, "adaptive" means an automatic adjustment of a building, a civil engineering structure, or components thereof e.g. of the apparatus (10), a façade or the multi-layer façade system (100) to varying environmental conditions operated by integrated sensors, actuators and a control unit obtaining a method for operating and/or regulating the system.

This method for operating, controlling and/or regulating is referred as a systematic procedure i.e. the description of a logical sequence of steps, e.g. the execution of one or several measurements to reach the desired aim of an ecologic and economic water use. The method may include a software e.g. a program.

"Hydroactive" in this context means the ability of surfaces to absorb moisture or water and/or to release it with a time delay.

The side facing the weather e.g. the rain, in other words facing the exterior space (environment) of the apparatus and/or of a multi-layer façade system is referred to as the "outside" ("O") in the following.

The side facing the building, in other words facing the building interior of the apparatus and/or of a multi-layer façade system is referred to as the "inside" ("I") in the following.

A civil engineering structure, to which the apparatus inter alia can be applied, can e.g. be a bridge, a tower, a windmill or the like. Complementary to civil engineering structures, buildings in this context are understood as independently usable, covered constructional facilities to be differentiated between one-storey and multi-storey buildings (house with two or more floors) e.g. high-rise buildings or skyscrapers, in which the floor of at least one room is more than 22 meters above the defined ground surface level.

Within the scope of this invention, water in general includes raw water that can be absorbed, stored or processed e.g. absorbed, filtered precipitation water and non-contaminated grey water as well as drinking water supplied e.g. by public water supply network.

Raw water is water from the environment that has not been treated and without treatment is unsafe for human consumption. Raw water includes precipitation water or rainwater e.g. water from clouds, fog, or vapour that due to gravity drops to earth in liquid form. Wherein driving rain events are characterized by a horizontal velocity component, deflecting the raindrops e.g. by wind from the vertical fall direction. Raw water can only be used e.g. for plant watering, cleaning purposes, washing machine operation and/or toilet flushing and is the opposite to drinking water e.g. fresh potable water for human consumption or waste water, one say contaminated water from toilet flushing, dishwashers, etc. Waste water has to be distinguished between contaminated precipitation water, black water and non-contaminated grey water without fecal contamination from baths, showers, washing machines etc. Non-contaminated grey water can be treated and reused for non-potable uses referring to raw water.

Finishings in the context of textile manufacturing e.g. chemical finishings for UV or fire resistance are measures for upgrading textile fabrics, yarns and fibres in order to optimize the material properties. In addition, coatings comprise the application of solid or liquid material e.g. nanocoating to a substrate fabric whereas lamination describes the bonding or fusing of a multi-layer fabric containing at least one textile with further layers of textile, plastic or metal films, foam or other appropriate material.

3D-Printing in the sense of the invention means the action or process of making a physical object from a three-dimensional digital model, typically by laying down many thin layers of a material in succession. Distinction is made between subtractive and additive manufacturing methods e.g. textile printing methods such as additive 3D printing via Fused Deposition Modelling (FDM) or Fused Filament Fabrication (FFF) with thermoplastic polymers or metals or other appropriate materials on a textile substrate fabric.

In an advantageous way, a water collecting device can be provided which is flow-connected to the textile element and/or to the water discharge conduit. The water collecting device can be embodied as a water storage, e.g. a water storage tank and/or a fluid-flow-through layer in the multi-layer façade system. Thus, precipitation water hitting the textile element can be absorbed, collected and/or stored in the water collecting device.

The water collection or water drainage (water outflow) can comprise a reservoir, basin, gutter or the like that may be integrated in the water collecting device e.g. in the (lower) frame profile and/or connected to a water storage of the water collecting device e.g. a water storage tank, a fluid-flow-through layer in the multi-layer façade system and/or other components for collecting, storing and/or treating e.g. for filtering water, as well as corresponding conduits for water transport.

The water discharge conduit can be flow-connected downstream to the textile element. Precipitation water absorbed by the apparatus can be drained off via the water discharge conduit and fed to a water consumer and/or to the water collecting device e.g. to a water storage. Collected water can be discharged directly or after a period of time (storing time).

In an appropriate manner, a water supply device can be provided which is flow-connected to the textile element and/or to the water supply conduit.

The water supply or water supply device, the delivery of (precipitation) water, can comprise a gutter, a pipe, a tube, an inflow line, a funnel or the like that may be integrated in the (upper) frame profile as well as corresponding conduits for water transport. Also, the water supply device may be configured as punctual or linear water injections on the second layer side of the textile element of the apparatus facing the building interior (inside) I, e.g. by water jets, (perforated) pipes or hoses or a perforated fluid-flow-through layer connected to the textile element.

The water supply conduit can be flow-connected upstream to the textile element. Water, e.g. supplied by public water supply network or absorbed water (former precipitation water absorbed by the apparatus), can be provided to the textile element by means of the water supply conduit to be discharged into the environment by evaporation.

In an advantageous way, the textile element i.e. the three-dimensional textile structure can preferably be formed from synthetic and/or polymer fibre (e.g. polyethylene (PE) fibre, polyester (PES/PET) fibre, polypropylene (PP) fibre, polyamide (PA) fibre, polytetrafluorethylene (PTFE) fibre, ethylene tetrafluoroethylene (ETFE) fibre or the like), from glass fibre, metal fibre and/or other appropriate materials, wherein these materials are embodied as monofilaments or multifilaments. The filaments may be optimized in shape by means of a specific functionalized filament profile, e.g. a spiral shape for better water transport. Thereby, a UV- and fire-resistant textile structure with good water-bearing properties can be achieved.

In an appropriate manner, the apparatus and/or the textile element can comprise hydrophilic (water-attracting) and/or hydrophobic (water-guiding, water-repellent) modifications. Therewith, the functionality of the apparatus can be maximized. The hydrophilic and/or hydrophobic modifications can be embodied as laminations, coatings, finishings, filament shape optimizations (e.g. spiral shaped filament) and/or additive surface structures that are microstructured or macrostructured. Modification materials can for example be polytetrafluorethylene (PTFE), polyvinyl chloride (PVC), silicone, paraffin wax and/or nanocoatings like titanium dioxide (TiO2) and/or silicon dioxide (SiO2) or the like or combinations thereof. The hydrophilic and/or hydrophobic modifications can preferably achieve the following properties: achieving or optimizing water-guidance (waterrepellence) and/or water-attraction for maximizing the effects of collecting and/or evaporating water, weather and dirt resistance, antimicrobiality with regard to mould, fungi and bacteria as well as self-cleaning properties.

In an advantageous way, the first layer of the textile element can have a water-attracting and/or hydrophilic lamination, coating, finishing and/or filament shape optimization (e.g. spiral shaped filament) and/or a (separate) water-attracting layer can be applied (additively) to the first layer. A water-attracting lamination, coating, finishing, filament shape optimization and/or a (separate) applied water-attracting layer favour absorption of precipitation water "inwards", i.e. into the inside of the textile element. The (separate) layer and/or the first layer can be of finer-pored design than the spacing structure formed by the connecting threads between the first layer and the second layer of the textile element. By a finer-pored design of the first layer and/or the (separate) layer a filter function can be achieved. This prevents dirt, animals, plants or parts thereof from getting into the interior of the apparatus e.g. into the textile element. The finer-pored structure may comprise e.g. a multifilament or nonwoven fabric to encapsulate a higher amount of water, thus leading to more effective and economical evaporative cooling effect.

In an appropriate manner, the second layer of the textile element can have a water-guiding (water-repellent) and/or hydrophobic lamination, coating, finishing and/or filament shape optimization (e.g. spiral shaped filament) and/or a (separate) water-guiding (water-repellent) layer can be applied (additively) to the second layer. The (separate) layer and/or the second layer can be water-tight or perforated. With the (separate) layer and/or the second layer being water-tight, water flow is positively influenced, so that absorbed precipitation water doesn't exit the textile element on the second layer side of the textile element (absorbed precipitation water is kept within the textile element). A configuration with perforation favours entrance of water into the interior of the textile element from the second layer side. Perforation can be advantageous, for example, for a homogeneous wetting of the textile element in order to achieve an evaporative cooling of the exterior (e.g. of the façade, the air space close to the façade and/or the urban space). In case of a perforated configuration, the textile element can be flow-connected to a further water supply device on the second layer side facing the building interior (inside) I.

To improve evaporation behaviour, between the second layer of the textile element and the (separate) applied water-guiding (water-repellent) layer an additional, finer-pored textile layer for encapsulating more water, e.g. a multifilament and/or nonwoven fabric and/or a superabsorber or the like, facing the exterior space (outside) O of the apparatus can be applied, thus contributing to more homogeneous wetting and higher evaporative cooling while reducing water consumption.

The (separate) layer can be embodied by laminating a foil (e.g. polyethylene (PE) foil, polyester (PES/PET) foil, polyvinyl chloride (PVC) foil, polytetrafluorethylene (PTFE) foil, ethylene tetrafluoroethylene (ETFE) foil, polypropylene (PP) foil, polyamide (PA) foil, silicone foil, latex foil, metal foil or similar) and/or a plate (metal plate, glass plate, silicone plate, polymer plate or similar) or the like onto the second layer.

In an advantageous way, the apparatus and/or the textile element can be planar, curved (e.g. anticlastic, synclastic, concave or convex), folded and/or adaptable in shape. Thus, the apparatus can be optimized for specific application. Adaptable in shape means being adaptive to optimize water absorption and/or water evaporation for maximizing performance of the apparatus.

In an appropriate manner, the first layer and/or the second layer can be configured as being actuatable by one or more actuators provided along a direction parallel to the plane of the first or the second layer. Thus, the first layer and the second layer can be displaced relatively to one another. By selective actuation of the first layer and/or the second layer the orientation i.e. the inclination angle of the connecting threads can be changed to improve water absorption and drainage behaviour and/or water discharge and evaporation behaviour of the apparatus.

In an advantageous way, the apparatus and/or the textile element can comprise folding structures which divide the apparatus and/or the textile element into several foldable, folded (e.g. relatively to one another), pivotable and/or rotatable sections. By means of such folding structures, one can maximize the surface of the apparatus e.g. of the textile element in order to increase its functionality.

In an appropriate manner, the folding structures can have a mechanical substructure. This substructure e.g. of steel, wood, aluminium and/or polymer or the like or combinations thereof provides a reinforcement for the folding structures. Optionally the folding structures can be introduced into the textile element by means of additive and/or subtractive manufacturing methods e.g. (3D) printing on textile substrate fabric and/or by textile connecting devices e.g. sewing and/or thermal fixation or the like or combinations thereof.

In an advantageous way, actuators can be provided, by means of which the foldable, folded, pivotable and/or rotatable sections can be operated. In this way, the folding structures can be adjusted to the respective angle of impact of the precipitation water drops and/or to the solar incidence angle by reorientation and/or re-rotation of the individual sections. The reorientation and/or re-rotation of the sections of the apparatus and/or of the textile element can be operated in a manual or automatically in an adaptive way by integrating sensors, actuators and a control unit.

The actuators can for example be embodied as linear actuators and/or rotational actuators e.g. electronic actuators and/or hydraulic actuators and/or pneumatic actuators or the like. Thus, water absorption and drainage and/or water discharge and evaporation of the apparatus can be selectively and specifically regulated and improved. These measures help to ensure that as much (precipitation) water as possible can be absorbed and/or discharged to evaporate in and on the apparatus e.g. in and on the textile element.

In an appropriate manner, sensors can be provided, by means of which in particular climate and/or environmental data e.g. ambient temperature, humidity, solar radiation data, wind data (e.g. wind speed and/or wind direction) and/or rain data (e.g. amount of precipitation water, angle of impact of the precipitation water drops, particle size and/or fall velocity of precipitation water drops) can be recorded. This allows the ambient conditions (climate and/or environmental data) of the apparatus to be monitored, recorded and/or to be transferred to a control unit providing the automated regulation and/or adaptation of the apparatus and/or of the textile element.

In an advantageous way, a control unit preferably obtaining a software e.g. a program for operating and/or regulating the actuators can be provided, wherein the control unit is configured in such a way that the apparatus and/or the textile element and/or sections thereof are adjusted in regard to climate and/or environmental conditions (e.g. to the angle of impact of precipitation water drops to optimize absorbing behaviour and/or to the solar incidence angle to optimize evaporating behaviour). This helps to maximize the performance of the apparatus. The control unit can be configured to interact with one or several sensors collecting environmental and/or climate data (e.g. as stated above) and with actuators that actuate the first layer and/or the second layer of the textile element and/or with actuators that operate the foldable, folded, pivotable and/or rotatable sections of the apparatus and/or of the textile element. This allows the actuators to be operated and/or regulated by the control unit based on environmental and/or climate data gathered by the sensors. The operation of the apparatus and/or of the textile element can be monitored with one or several further sensors.

In an appropriate manner, a holding device can be provided to which the components of the apparatus are attached or attachable. Thus, the apparatus disclosed herein can be applied to a building or other civil engineering structures by means of such a holding device, one say a fixation to attach one component to another e.g. to mount the apparatus to a building or a civil engineering structure. Furthermore, the components of the apparatus are arranged relatively to each other. The holding device can be embodied linearly as a frame profile or punctually by other appropriate methods e.g. a frame profile can be attached to the holding device by mounting brackets.

As already indicated above, the water collecting device can comprise a frame profile and/or a water storage e.g. a storage tank for storing precipitation water. The textile element can be held linearly by the frame profile e.g. by welt edge (piping) connections and/or punctually and/or by other appropriate fixations. The frame profile can be integrated, connected and/or attached to the holding device. The water storage may be flow-connected with the frame profile, wherein the water storage can be integrated in the building or in the façade as a functional storage location in a multi-layer façade system.

In an appropriate manner, a filter for filtering precipitation water can be provided, wherein the filter is integrated into the textile element and/or arranged in or on the water collecting device e.g. in or on the frame profile and/or in the building. This allows the water to be filtered before it is stored or made available to consumer.

In an advantageous way, a pump and/or a water temperature control device for water heating and cooling can be provided, which are in flow connection with the water supply device and/or with the water collecting device. By means of the pump, water can be fed to the water collecting device e.g. a water storage tank or a fluid-flow-through layer in a multi-layer façade system and/or transported further e.g. inside, on or outside the building. In addition, the pump can be used to pump water to the water supply device. By means of the water temperature control device the water can be tempered, i.e. heated or cooled as required.

In an appropriate manner, the water supply device and/or the water collecting device can be connected to a heat exchanger. In this way, heat can be extracted from the water supply device and/or from the water collecting device or heat can be added as required. One part of the heat exchanger can be connected to the water collecting device (downstream of the textile element) and another part of the heat exchanger can be connected to the water supply device (upstream of the textile element), wherein the heat exchanger parts are connected to each other to interact with a further building component e.g. with a fluid-flow-through layer in a multi-layer façade system and/or with a further technical building equipment in, on or outside a building or civil engineering structure. Thus, heat can be exchanged between both heat exchanger parts.

The invention also achieves the above-mentioned object by usage of an apparatus according to one or more of the above aspects as a construction element in, on or outside a building or a civil engineering structure.

Regarding the advantages to be achieved therewith, reference is made to the respective explanations on the apparatus in order to avoid repetitions. The features described in connection with the apparatus can be used for further configuration.

The civil engineering structure can e.g. be, but is not limited to, a bridge, a horizontal wind turbine or a vertical wind turbine or other civil engineering structures.

The invention also achieves the above-mentioned object by usage of at least one apparatus according to one or more of the above aspects on or in the façade of a new building and/or of an existing building as additive element on a conventional existing façade.

Regarding the advantages to be achieved therewith, reference is made to the respective explanations on the apparatus in order to avoid repetitions. The features described in connection with the apparatus can be used for further configuration.

Not only new buildings can be equipped with this apparatus, but also existing buildings with conventional façades of frame and solid constructions (such as concrete, brick and/or wooden façades, thermal insulation composite systems, etc.). By retrofitting, these buildings become more ecological, e.g. by saving water, reducing the building's internal energy consumption (e.g. for building interior conditioning and water pump energy) and/or by offering the possibility of energy efficient urban cooling whilst reducing the impact on the public sewing infrastructure as well.

A conventional thermal insulation composite system can e.g. have the following structure (from outside to inside): External plaster, thermal insulation, masonry and internal plaster. The device can in this case be installed on the outside O of the external plaster and statically fixed in the load-bearing masonry by the holding device.

The invention also achieves the above-mentioned object by a façade system for separating a building interior (inside) I from an exterior space (outside) O, having an apparatus according to one or more of the above aspects, the façade system optionally being constructed in one or more layers and/or modularly. Thus, a hydroactive façade can be provided.

Regarding the advantages to be achieved therewith, reference is made to the respective explanations on the apparatus in order to avoid repetitions. The features described in connection with the apparatus and/or the features described in the following can be used for further configuration of the multi-layer façade system.

In an advantageous way, on the side on which the second textile layer of the textile element (apparatus) is located, the façade system can have at least one fluid-flow-through layer and/or an insulation layer for thermal and/or acoustic damping purposes and/or an inner layer e.g. an (acoustic) textile and/or a PVC coated polyester membrane or a PTFE coated glass fibre fabric or the like. Functional layers (e.g. fluid-flow-through layers) can be used to regulate the building interior climate (temperature control of the building interior wall surfaces and/or regulation of the interior air humidity) and/or for regulation of the acoustic and sound insulation properties and/or for active fire protection measures. Besides, the fluid-flow-through layer can serve as a water storage for precipitation water.

In an appropriate manner, two fluid-flow-through layers can be provided, wherein the first fluid-flow-through layer is arranged on one side of the insulation layer and the second fluid-flow-through layer is arranged on the other side of the insulation layer. More water can be stored by two fluid-flow-through layers. In addition, solar heat energy can be absorbed or discharged on both sides of the thermal insulation layer. This contributes to a flexible, energy efficient application of the façade system.

In an advantageous way, one of the two or both fluid-flow-through layers can be configured and utilized as a thermal collector and/or can be used for temperature control of the building interior wall surfaces and/or for regulation of the interior air humidity and/or for regulation of the acoustic and sound insulation properties and/or for active fire protection measures. When used as a thermal collector, solar radiation is absorbed and converted into heat. When used as a heating unit one of the two or both of the fluid-flow-through layers can emit heat energy on the corresponding side of the insulation layer depending on the prevailing ambient conditions and the need for conditioning. In addition, heat flux and/or interior comfort in terms of temperature, humidity and/or acoustics can be influenced. For this purpose, selective water flow of precipitation water and/or of water from the public water supply network can be initiated through these layers.

In an appropriate manner, a further apparatus according to one or more of the above aspects can be provided, said further apparatus forming the inner layer, wherein the first layer of the textile element of the further apparatus faces the building interior (inside) I. Consequently, a further functional layer for regulating interior temperature and air humidity is provided with a further textile element acting as an evaporator on the inside I. With the first layer facing the building interior this further apparatus is arranged "laterally reversed" in comparison to the first apparatus.

In an advantageous way, the façade system can comprise a preferably modular profile system to which the components of the multi-layer façade system and/or the holding device of the apparatus as described above are attached or attachable. Thus, the façade system can be modularly upgraded with additional layers and adapted to the application as well as to the specific local conditions and building requirements. For example, in cold regions an additional insulating layer can be added by extending the profile system with another profile module. Preferably, the frame profile and the holding device of the apparatus are mutually compatible. Thus, the frame profile can be integrated, connected and/or attached to the holding device. The profile system can be made from aluminium, steel, polymer or wood or the like or combinations thereof (aluminium, steel, polymer, wood or combined profile system).

The invention also achieves the above-mentioned object by a method for operating an apparatus according to one or more of the above aspects and/or a multi-layer façade system according to one or more of the above aspects, wherein precipitation water (absorbed by the apparatus described above) is supplied to a use in, on or outside the building and/or wherein water (provided by the public water supply network) and/or precipitation water (absorbed by the apparatus described above) is supplied to the apparatus e.g. to the textile element to be discharged by evaporation.

Regarding the advantages to be achieved therewith, reference is made to the respective explanations on the apparatus in order to avoid repetitions. The features described in connection with the apparatus, the multi-layer façade system and/or the features described in the following can be used for further configuration of the apparatus and/or of the multi-layer façade system.

In an appropriate manner, water (provided by the public water supply network) and/or precipitation water (absorbed by the apparatus described above) can be discharged via the textile element, in particular by evaporation. Thus, evaporative cooling of the facade, the air space close to the façade and/or the urban space can be realized, e.g. in case of heat stress caused by absorption of solar radiation on façades and/or other sealed urban surfaces.

In an advantageous way, precipitation water absorbed by the apparatus can be supplied to consumer in, on or outside the building in the form of raw water and/or can be processed into drinking water. Thus, reduced demand of drinking water (e.g. provided by public water supply network) as well as reduced demand of water pumping energy can be achieved (i.e. water does not need to be pumped from public water supply network to a user on any floor in a high-rise building).

In an appropriate manner, the precipitation water can be used for the interior conditioning of buildings. Thus, interior and user comfort can be increased, e.g. by temperature control of wall surfaces (heating and/or cooling), regulation of room air humidity, etc. as well as by regulating the acoustic and sound insulation properties or qualities of the façade system.

In an advantageous way, the precipitation water can be provided for plant-specific fire protection measures. Thus active fire protection measures can be implemented in, on or outside a building.

In an appropriate manner, the precipitation water can be discharged to the public water supply network and/or delivered to neighbouring buildings and/or civil engineering structures, especially in the case of excess precipitation water yields. Thus, additional buildings and/or civil engineering structures can be supplied with precipitation (raw) water and/or with processed drinking water.

The invention also achieves the above-mentioned object by a method e.g. a software for controlling and/or regulating an apparatus according to one or more of the above aspects and/or a multi-layer façade system according to one or more of the above aspects. The method comprises the following steps:
- retrieving forecast weather data from a weather service (e.g. via the Internet) for a defined (past, present or future;
   time period,
- estimating the water consumption of drinking water, raw water and/or grey water in, on or outside a building or civil engineering structure in the defined time period, by means of analysis of the water consumption in, on or outside the building or civil engineering structure by means of a flow meter, and
- comparing the estimated consumption of drinking and/or raw water and/or grey water with expected precipitation water yields from the forecast weather data.

Regarding the advantages to be achieved therewith, reference is made to the respective explanations on the apparatus in order to avoid repetitions. The features described in connection with the apparatus, the multi-layer façade system and/or the features described in the following can be used for further configuration of the apparatus and/or of the multi-layer façade system.

In an advantageous way, the amount of water required for evaporative cooling of the facade, the air space close to the façade and/or the urban space can be determined, e.g. in case of heat. This makes it possible to determine how much water is needed for this purpose and how much water can be supplied for other purposes or to consumer.

In an appropriate manner, the amount of drinking water, raw water and/or grey water consumption required for consumer in, on or outside the building or civil engineering structure can be determined. Thus, raw water can be provided to consumer, e.g. for plant watering, washing machine operation and/or toilet flushing. Plant watering includes the watering of private as well as public green spaces, e.g. by attaching the apparatus to public buildings and/or public civil engineering structures.

In an advantageous way, the amount of water required for interior conditioning of the building or civil engineering structure can be determined. Thus, the determination of requirements also refers to the consumption related to indoor comfort. Interior conditioning can be done by regulation of interior wall surface temperatures and/or room air humidity and/or by acoustic and sound control of the interior.

In an appropriate manner, the amount of water required for the use of plant-specific fire protection measures can be determined. Thus, the determination of requirements also considers active fire protection measures.

In an advantageous way, excess water absorbed by the apparatus above can be delivered to neighbouring buildings and/or civil engineering structures and/or excess water can be fed into the public water supply network. Thus, if one or more determination of requirements (water requirement for evaporative cooling, water requirement for consumer, water requirement for interior conditioning and/or water requirement for plant-specific fire protection measures) show that excess water is available, it can be supplied to the public water supply network and/or to other buildings or civil engineering structures and/or to other customer. This contributes to an intelligent, economic and ecologic water supply in urban areas.

The invention is described in more detail below with reference to the figures. Identical or functionally identical elements are designated with same reference signs, but possibly only once. The figures show:
- Fig.1: an embodiment of an apparatus for absorbing precipitation water and for discharging water by evaporation;
- Fig.2a,b: operation of the apparatus of figure 1 in case of rain to absorb precipitation water (figure 2a) and in case of high outdoor temperatures to discharge water by evaporation (figure 2b);
- Fig.3a,b: operation of the apparatus of figure 1 when provided with actuators for actuating the first layer and/or the second layer of the textile element in case of rain to absorb precipitation water (figure 3a) and in case of high outdoor temperatures to discharge water by evaporation (figure 3b);
- Fig.4a-c: usage of the apparatus according to figure 1 as a construction element at a bridge (figure 4a), at a vertical wind turbine (figure 4b) or at a horizontal wind turbine (figure 4c);
- Fig.5: usage of the apparatus according to figure 1 on a conventional façade (e.g. thermal insulation composite system) of an existing building;
- Fig.6: an embodiment of a multi-layer façade system with the apparatus according to figure 1 being integrated therein;
- Fig.7a,b: operation of the multi-layer façade system of figure 6 in case of rain to absorb precipitation water (figure 7a) and in case of high outdoor temperatures to discharge water by evaporation (figure 7b);
- Fig.8a,b: the multi-layer façade system of figure 6 with temperature control of individual layers for regulation of interior wall surface temperatures in hot weather conditions (figure 8a) and in cold weather conditions (figure 8b);
- Fig.9a,b: the multi-layer façade system of figure 6 when being used as a thermal collector (figure 9a) and/or for influencing the heat flux of the façade to the outside O (figure 9b);
- Fig.10a,b: the multi-layer façade system of figure 6 having a further apparatus according to figure 1 forming an inner layer of the façade system (figure 10a) and the operation of the multi-layer façade system with a further apparatus when discharging water by evaporation for the interior (figure 10b); and
- Fig.11: the multi-layer façade system of figure 6 when the apparatus according to figure 1 is being provided with folding structures and actuators for operating the folding structures.

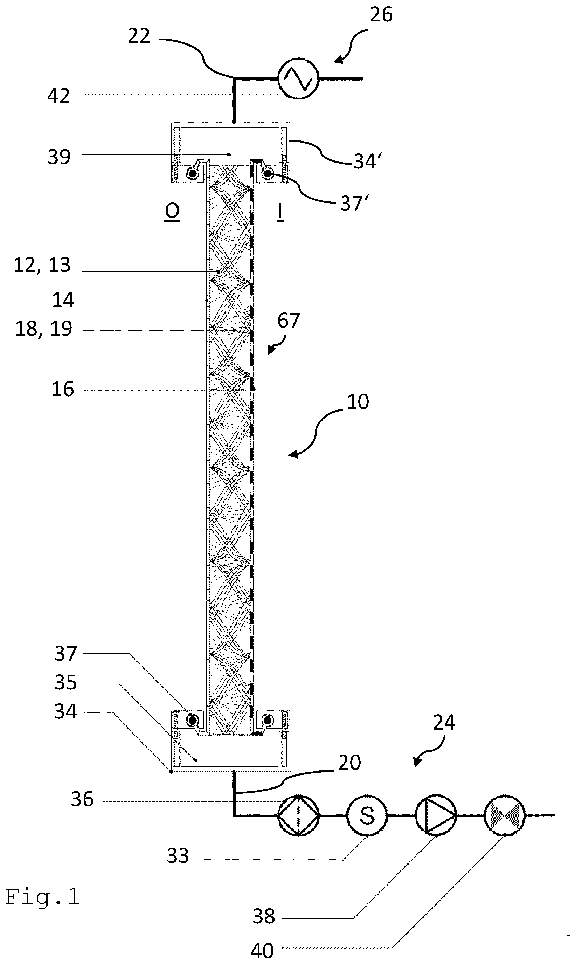

Figure 1 shows an apparatus 10 for absorbing precipitation water from rain events, especially from driving rain events, and for water discharge by evaporation. The apparatus 10 comprises a textile element 12 for absorbing rainwater drops and/or for discharging water (provided by the public water supply network) and/or precipitation water (absorbed by the apparatus described above) by evaporation. The textile element 12 embodies a three-dimensional textile structure 13, with a first, water-permeable layer 14 (outer layer 14) and a second, water-guiding layer 16 (inner layer 16). The first layer 14 and the second layer 16 are connected to one another by means of water-guiding connecting threads 18. The connecting threads 18 form a spacing structure 19. In the embodiment shown, the textile element 12 is fluidically connected to a water discharge conduit 20 and to a water supply conduit 22.

The water discharge conduit 20 is flow-connected downstream to the textile element 12. The water supply conduit 22 is flow-connected upstream to the textile element 12.

A water collecting device 24 is provided which is flow-connected to the textile element 12 and/or to the water discharge conduit 20. The water collecting device 24 can comprise different components for storing, treating (e.g. filtering) and/or transporting water.

A water supply device 26 is provided which is flow-connected to the textile element 12 and/or to the water supply conduit 22. The water supply device 26 can be flow-connected to the public water supply network or to the water collecting device 24 (not shown).

The textile element 12 i.e. the three-dimensional textile structure 13 can preferably be formed from synthetic and/or polymer fibre (e.g. polyethylene (PE) fibre, polyester (PES/PET) fibre, polypropylene (PP) fibre, polyamide (PA) fibre, polytetrafluorethylene (PTFE) fibre, ethylene tetrafluoroethylene (ETFE) fibre or the like), from glass fibre, metal fibre and/or other materials, wherein these materials are embodied as monofilaments or multifilaments, wherein the filaments may be optimized in shape, e.g. spiral shape for better water transport.

The apparatus 10 and/or the textile element 12 can comprise hydrophilic (water attracting) and/or hydrophobic (water-guiding, water-repellent) modifications (not shown). The hydrophilic and/or hydrophobic modifications can be embodied as laminations, coatings, finishings, filament shape optimizations (e.g. spiral shaped filament) and/or additive surface structures that are microstructured or macrostructured, as explained above. Modification materials can for example be polytetrafluorethylene (PTFE), polyvinyl chloride (PVC), silicone, paraffin wax and/or nanocoatings like titanium dioxide (TiO2) and/or silicon dioxide (SiO2) or the like or combinations thereof.

The first layer 14 of the textile element 12 may have a water-attracting and/or hydrophilic lamination, coating, finishing, filament shape optimization and/or a (separate) water-attracting layer that is additively applied to the first layer 14 (not shown). The (separate) layer and/or the first layer 14 can be of finer-pored design than the spacing structure 19 formed by the connecting threads 18 between the first layer 14 and the second layer 16 of the textile element 12. The finer-pored textile may comprise e.g. a multifilament or nonwoven fabric to encapsulate more water, thus leading to more effective and economical evaporative cooling effect (not shown).

The second layer 16 of the textile element 12 may have a water-guiding (water-repellent) and/or hydrophobic lamination, coating, finishing, filament shape optimization and/or a (separate) water-guiding (water-repellent) and/or hydrophobic layer is additively applied to the second layer 16 (not shown). The (separate) layer and/or the second layer can be water-tight or perforated. The (separate) water-guiding (water-repellent) and/or hydrophobic layer can be embodied by laminating a foil (e.g. polyethylene (PE) foil, polyester (PES/PET) foil, polyvinyl chloride (PVC) foil, polytetrafluorethylene (PTFE) foil, ethylene tetrafluoroethylene (ETFE) foil, polypropylene (PP) foil, polyamide (PA) foil, silicone foil, latex foil, metal foil or similar) and/or a plate (metal plate, glass plate, silicone plate, polymer plate or similar) or the like onto the second layer 16.

To improve evaporation behaviour, an additional, finer-pored textile layer for encapsulating more water, e.g. a multifilament and/or nonwoven fabric and/or a superabsorber or the like (not shown), can be applied between the second layer 16 of the textile element 12 and the (separate) applied water-guiding (water-repellent) layer (not shown) to the exterior space (outside) O of the apparatus, thus contributing to more homogeneous wetting and higher evaporative cooling while reducing water consumption.

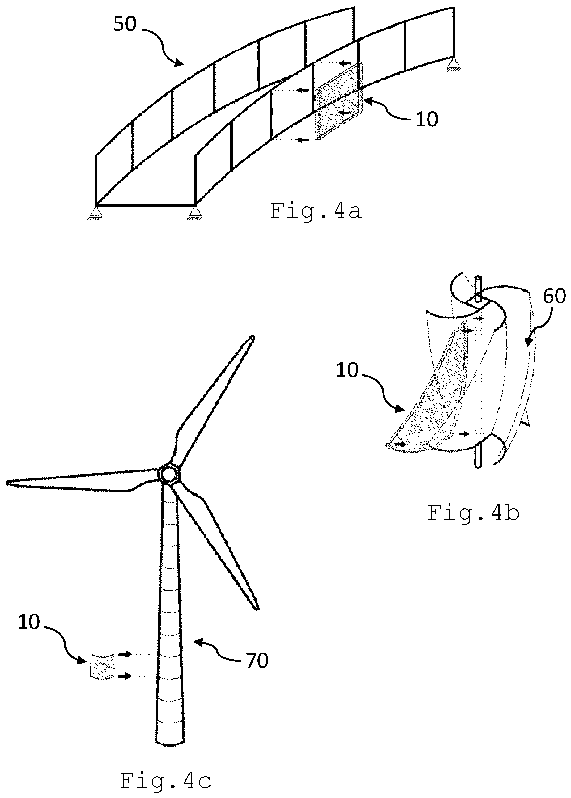

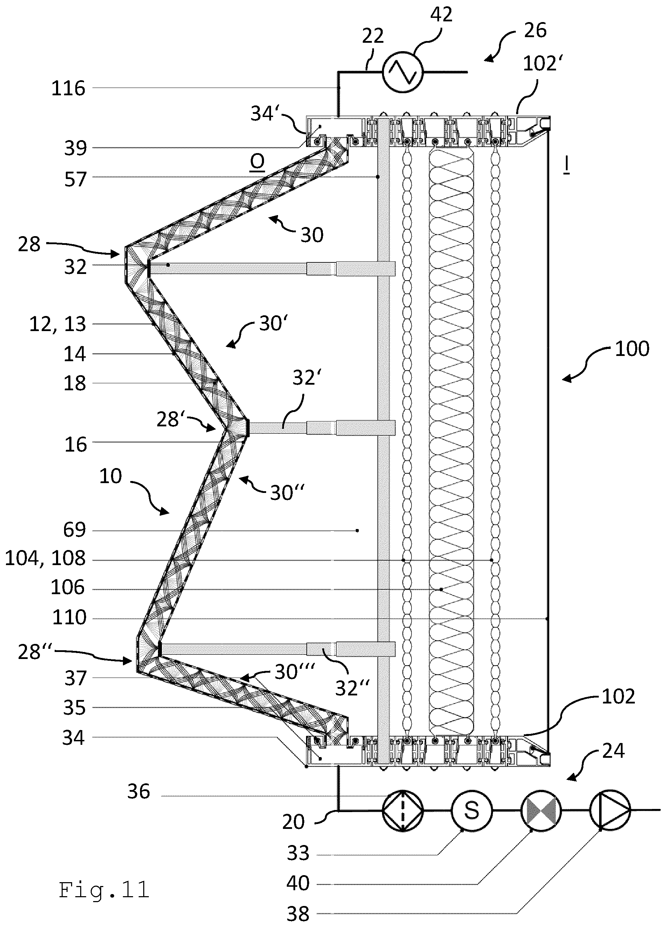

In present embodiment, the apparatus 10 and the textile element 12 are planar in shape. In other embodiments, the apparatus 10 and/or the textile element 12 can be curved (e.g. anticlastic, synclastic, concave or convex), folded and/or adaptable in shape (see figures 4a,b,c and 11).

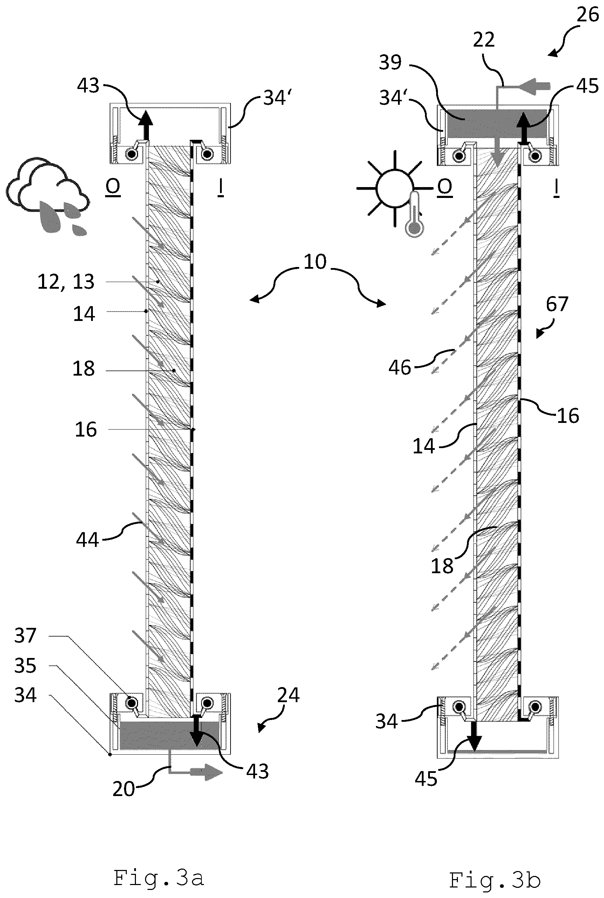

The first layer 14 and/or the second layer 16 can be configured as being actuatable by one or more actuators (not shown) provided along a direction parallel to the plane of first layer 14 or second layer 16, respectively (see figures 3a,b).

The apparatus 10 and/or the textile element 12 can comprise folding structures 28, 28', 28'' that divide the apparatus 10 and/or the textile element 12 into several foldable, folded, pivotable and/or rotatable sections 30, 30', 30'' (see figure 11). The folding structures 28, 28', 28'' can have a mechanical substructure e.g. of steel, wood, aluminium and/or polymer or the like or combinations thereof and/or the folding structures can be introduced into the textile element 12 by means of additive and/or subtractive manufacturing methods e.g. textile (3D) printing and/or the folding structures 28, 28', 28'' can be embodied by textile connecting devices e.g. sewing and/or thermal fixation or the like or combinations thereof (not shown).

Actuators 32, 32', 32'' (e.g. linear and/or rotational actuators) can be provided, by means of which the foldable, folded, pivotable and/or rotatable sections 30, 30', 30'' can be operated.

Sensors can be provided (not shown), by means of which climate and/or environmental data can be recorded, as explained above.

A control unit (not shown) for operating and/or regulating the actuators 32, 32', 32'' can be provided, wherein the control unit is configured in such a way that the apparatus 10 and/or the textile element 12 and/or sections 30, 30', 30'' thereof are adjusted in regard to climate and/or environmental conditions (e.g. to the angle of impact of precipitation water drops and/or to the solar incidence angle). The control unit can be configured to interact with one or several sensors collecting environmental and/or climate data and with actuators that actuate the first layer and/or the second layer of the textile element and/or with actuators that operate the foldable, folded, pivotable and/or rotatable sections of the apparatus and/or of the textile element.

A holding device can be provided to which the components of the apparatus 10 are attached (not shown) or attachable. Thus, the components of the apparatus 10 are arranged relatively to each other and the apparatus 10 can be attached to a building or a civil engineering structure.

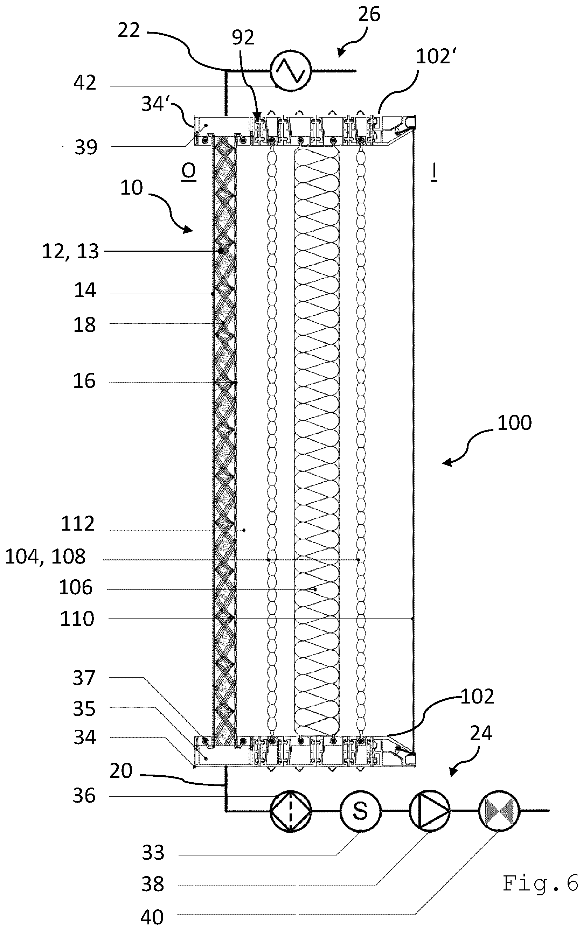

The water collecting device 24 can comprise a frame profile 34 in which water collection or water drainage (water outflow) 35 takes place and/or the water collecting device 24 can comprise a water storage 33, which can be embodied as a water storage tank or as a fluid-flow-through layer in a multi-layer façade system (see figure 1 and 6). The textile element 12 can be held linearly by the frame profile 34, e.g. by welt edge (piping) connections 37 and/or punctually and/or by other appropriate fixations (not shown). The frame profile 34 can be integrated, connected and/or attached to the holding device (not shown). Furthermore, the water storage 33 may be flow-connected with the frame profile 34.

A filter 36 for filtering precipitation water is provided, wherein the filter 36 is integrated into the textile element 12 and/or arranged in or on the water collecting device 24, e.g. in or on the frame profile 34 of the water collecting device 24 and/or in the building.

A pump 38 and/or a water temperature control device (water heating and cooling) 40 are provided, which are each flow-connected with the water collecting device 24 via the water discharge conduit 20 and/or with the water supply device 26 via the water supply conduit 22 in the present embodiment.

The water supply device 26 comprises a frame profile 34', in which water supply 39 takes place. The textile element 12 can be held linearly by the frame profile 34', e.g. by welt edge (piping) connections 37' and/or punctually and/or by other appropriate fixations (not shown). The frame profile 34' can be integrated, connected and/or attached to the holding device. Furthermore, the water storage 33 and/or the public water supply network may be flow-connected with the frame profile 34'.

The water supply device 26 and/or the water collecting device 24 can be connected to a heat exchanger 42, 120.

In an advantageous way, in addition or alternatively to water supply device 26 a further water supply device 67 e.g. comprising one or several linear or punctual injectors can be provided for a homogenous water wetting of the textile element 12.

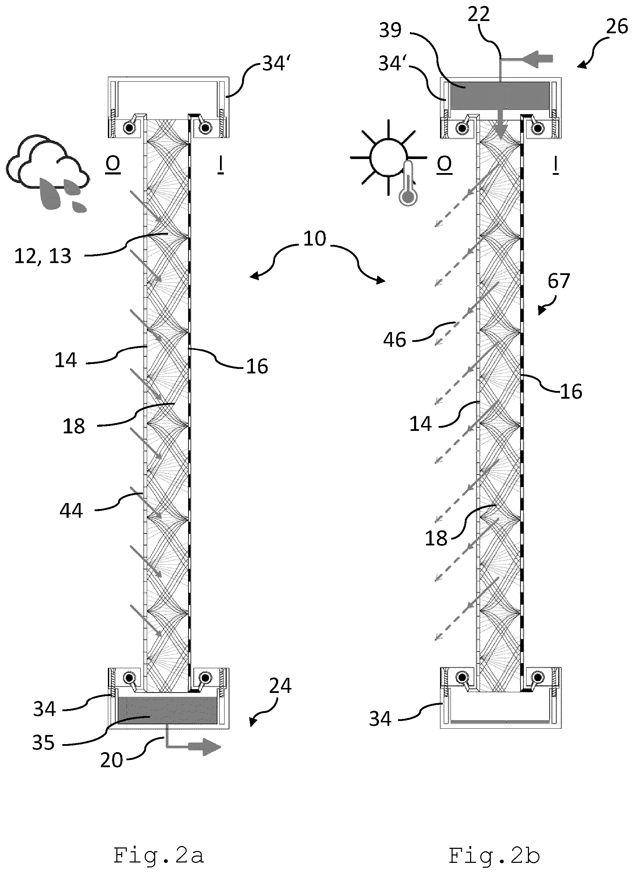

Figures 2a and 2b show the operation of the apparatus 10 according to figure 1. On the side facing the first, water-permeable layer 14 (outer layer 14) of the textile element 12 of apparatus 10 is the exterior (outside) O and on the side facing the second, water-guiding layer 16 (inner layer 16) of the textile element 12 of apparatus 10 is the interior (inside) I.

Figure 2a shows the apparatus 10 during rain or driving rain events when absorbing precipitation water. In this situation, the apparatus 10 acts as an absorber and collector device. Precipitation water can be absorbed (collected) by the apparatus 10 e.g. by the textile element 12 and optionally stored. When absorbing, precipitation water enters the textile element 12 on the side of the first layer 14 (see arrows 44). The precipitation water is led from the first, water-permeable layer 14 along the connecting threads 18 to the second, water-guiding layer 16.

Since the second layer 16 is water-guiding (water-repellent) and/or hydrophobic, absorbed precipitation water does not or only in a negligible way infiltrate into or beyond the second layer 16 or into the interior of a multi-layer façade system. Under the influence of gravity, absorbed water flows downwards in the textile element 12, along the second layer 16 to water collection or water drainage (water outflow) 35 e.g. to a reservoir, basin, gutter, or the like that may be integrated in the (lower) frame profile 34 of the water collecting device 24. From there, absorbed and collected water can be fed to a water storage, a water consumer and/or to the public water supply network, for example.

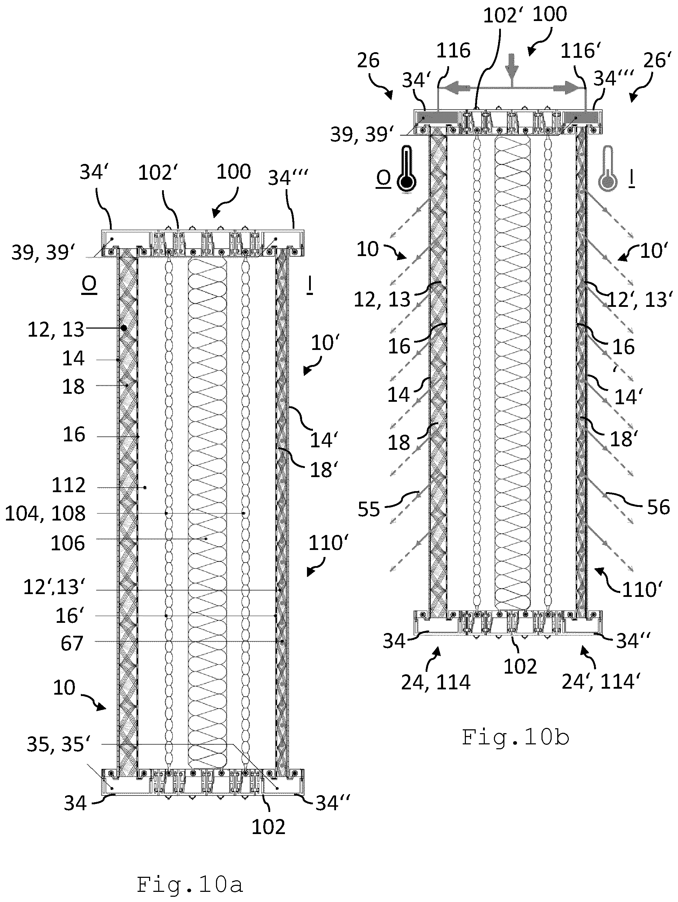

Figure 2b shows the apparatus 10 during heat events when discharging water by evaporation. In this situation, the apparatus 10 acts as an evaporator device. Water can be evaporated by the apparatus 10 e.g. by the textile element 12 for evaporative cooling of the exterior e.g. of the building façade (multi-layer façade system 100 or conventional façade 82 of an existing building 80) and/or of the air volume close to the façade and/or of the urban space and/or for evaporative cooling of a building's interior (see figure 10a,b). For evaporating, water enters the textile element 12 from the water supply 39 e.g. from the frame profile 34' of the water supply device 26 arranged upstream of the textile element 12. Under the influence of gravity, the supplied water moves along the second, water-guiding (water-repellent) and/or hydrophobic layer 16 downwards in the textile element 12, moving to the first, water-permeable layer 14 via the connecting threads 18. During this process, the water in and on the apparatus 10 e.g. in and on the textile element 12 evaporates due to solar radiation and heat prevailing on the outside O of the apparatus 10 (see arrows 46). The evaporation process causes corresponding cooling energy to be released which reduces the effect of heat loads on the outside O of the apparatus 10 and/or of the multi-layer façade system 100.

For homogeneous water wetting of the evaporator surface, alternatively or in addition to water supply device 26 an (additional) water supply device 67 can be provided to supply the textile element 12 punctually or linearly preferably at several places and/or at different heights with water. The water supply device 67 may comprise one or several injectors e.g. water jets, (perforated) pipes or hoses arranged side by side along the height and/or the width of the apparatus 10 e.g. of the textile element 12 (not shown). Preferably the water supply device 67 can be flow-connected with the water supply device 26 e.g. the frame profile 34' and/or with the water supply conduit 22 and/or with the water collecting device 24 e.g. the frame profile 34 and/or with the water discharge conduit 20.

The water supplied to the textile element 12 via water supply device 26 and/or via water supply device 67 may be water that has previously been absorbed (collected) and stored by the apparatus 10 and/or water that has been provided by public water supply network.

Figures 3a and 3b show the operation of the apparatus 10 when provided with actuators (not shown) for actuating the first layer 14 and/or the second layer 16 of the textile element 12.

As mentioned above, the first layer 14 and/or the second layer 16 can be configured as being actuatable by one or more actuators (not shown) provided along a direction parallel to the plane of first layer 14 or second layer 16, respectively. Thus, the first layer 14 and the second layer 16 can be displaced relatively to one another. In this manner, the orientation e.g. the inclination angle of the connecting threads 18 can be changed.

Figure 3a shows a situation, in which the first layer 14 is actuated to be displaced against the direction of gravity (upwards) and/or in which the second layer 16 is actuated to be displaced along the direction of gravity (downwards; see arrows 43). This aligns the connecting threads 18 so that they are inclined downwards from the first layer 14 to the second layer 16. In this way, water absorption behaviour is improved (see arrows 44), as absorbed water moves faster from the first layer 14 to the second layer 16 and thus moves faster downwards in the textile element 12 to water collection or water drainage (water outflow) 35 **e.g.** to a reservoir, basin, gutter, or the like that may be integrated into the (lower) frame profile 34 of the water collecting device 24.

Figure 3b shows a situation, in which the first layer 14 is actuated to be displaced along the direction of gravity (downwards) and/or in which the second layer 16 is actuated to be displaced against the direction of gravity (upwards; see arrows 45). This aligns the connecting threads 18 so that they are inclined upwards from the first layer 14 to the second layer 16. In this way, water discharging behaviour is improved (see arrows 46), as water provided to the textile element 12 by the water supply 39 of water supply device 26 and/or of water supply device 67 moves downwards faster and thus moves also faster to the first, water-permeable layer 14.

Figures 4a to 4c show the usage of the apparatus 10 according to figure 1 as a construction element to different buildings or civil engineering structures.

Figure 4a shows an application of the apparatus 10 to a civil engineering structure in the form of a bridge 50. The apparatus 10 and/or the textile element 12 are planar in shape (planar collector and/or evaporator surface). In this application, the apparatus 10 and/or the textile element 12 as well can be curved (e.g. anticlastic, synclastic, concave or convex), folded and/or adaptable in shape (not shown).

Figure 4b shows an application of the apparatus 10 to a civil engineering structure in the form of a wind turbine 60. The apparatus 10 and/or the textile element 12 are synclastically (double) curved in shape (synclastically curved collector and/or evaporator surface). In this application, the apparatus 10 and/or the textile element 12 can be (double) curved anticlastically (anticlastically curved collector and/or evaporator surface) as well (not shown).

Figure 4c shows an application of the apparatus 10 to a civil engineering structure in the form of a wind turbine 70. The apparatus 10 and/or the textile element 12 are convex (simply) curved in shape (convex curved collector and/or evaporator surface). In this application, the apparatus 10 and/or the textile element 12 can be (simply) curved concave (concave curved collector and/or evaporator surface) as well (not shown).

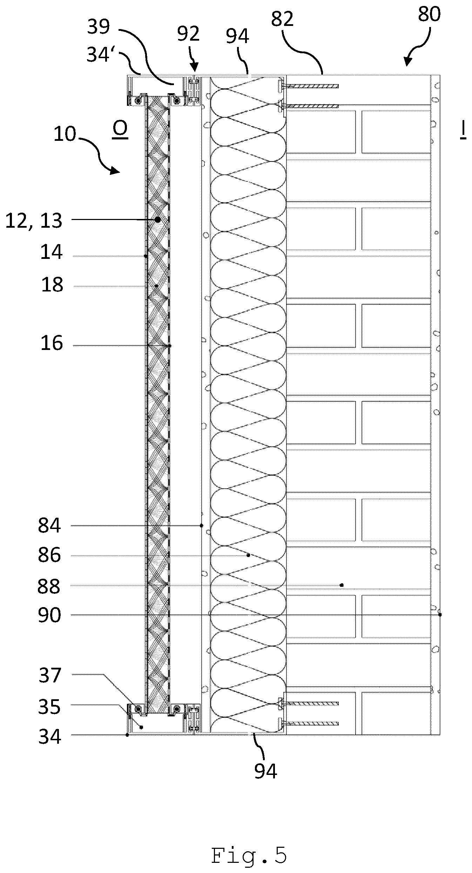

Figure 5 shows the usage of the apparatus 10 according to figure 1 on a conventional facade 82 (e.g. on a thermal insulation composite system) of an existing building 80.

The existing building 80 is equipped with the apparatus 10 by mounting the apparatus to the supporting components of the building façade e.g. to the masonry in the case of solid constructions 88 or to the steel structure in the case of frame constructions (not shown). A conventional façade 82 (e.g. thermal insulation composite system) may have the following components (from outside to inside): External plaster 84, thermal insulation 86, supporting components of the building facade e.g. masonry in the case of solid constructions 88 and internal plaster 90.

The apparatus 10 is mounted to a conventional façade 82 (e.g. to a thermal insulation composite system) of an existing building 80 by a holding device 92. The holding device 92 comprises mounting brackets 94 that are connected to the frame profile 34, 34' of the apparatus 10 on one end and to the façade 82, in other words to the supporting components of the building facade e.g. masonry in the case of solid constructions 88 or to the steel structure in the case of frame constructions (not shown), on the other end, for example by screws.

By retrofitting an existing building 80 with the apparatus 10, the building becomes more ecological, e.g. through lower energy consumption and water savings by offering urban climate advantages at the same time.

Figure 6 shows an embodiment of a multi-layer façade system 100 for separating a building interior (inside) I from an exterior space (outside) O. The façade system 100 comprises an apparatus 10 that is integrated on the side facing the exterior (outside) O of the multi-layer façade system 100. The apparatus 10 corresponds to the apparatus 10 in Figure 1, reference being made to the specifications in Figure 1 to avoid repetition.

The façade system 100 represents a hydroactive façade, that allows to absorb water from rain events by the apparatus 10, to store and/or to use water absorbed by the apparatus 10 and/or water supplied by the public water supply network e.g. for interior conditioning in several layers of the façade system 100 and/or to discharge water for evaporative cooling by the apparatus 10.

The façade system 100 can be constructed in one or more layers and/or modularly. The façade system 100 comprises a preferably modular profile system 102, 102' to which the components of the multi-layer façade system 100 and/or the holding device 92 and/or the frame profile 34, 34' of the apparatus 10 can be attached. The frame profile 34, 34' of the apparatus 10 and/or the holding device 92 and the profile system 102, 102' are compatible with each other. In this embodiment, the frame profile 34, 34' of apparatus 10 is attached to the profile system 102, 102'of the façade system 100. The profile system 102, 102' can be embodied as an aluminium, steel, polymer or wood profile system or the like or combinations thereof.

The modular profile system 102, 102' holds several layers of the façade system 100. In this embodiment, the multi-layer façade system 100 comprises on the side on which the second layer 16 of the textile element 12 of the apparatus 10 is located, (from outside to inside) a first fluid-flow-through layer 104, an insulation layer 106, a second fluid-flow-through layer 108 and an inner layer 110, e.g. an (acoustic) textile and/or an inner membrane. These layers are separated from each other by air spaces (air layers), for example by air space (air layer) 112 between the textile element 12 of apparatus 10 and the first fluid-flow-through layer 104.

Via insulation layer 106, fluid-flow-through layers 104, 108 and inner layer 110 the thermal and acoustic properties of the façade system 100 as well as building interior comfort are optimized. Fluid-flow-through layers 104, 108 can serve as a reservoir for storage of precipitation water and/or for climate and acoustic regulation of the interior and/or for active fire protection measures. Fluid-flow-through layers 104, 108 are flow-connected with the apparatus 10 e.g. with the textile element 12, particularly with the water collecting device 24 and/or with the water supply device 26 e.g. via the profile system 102, 102', via the frame profile 34, 34', via the water discharge conduit 20, via the water supply conduit 22 and/or via fluid connections 114, 116.

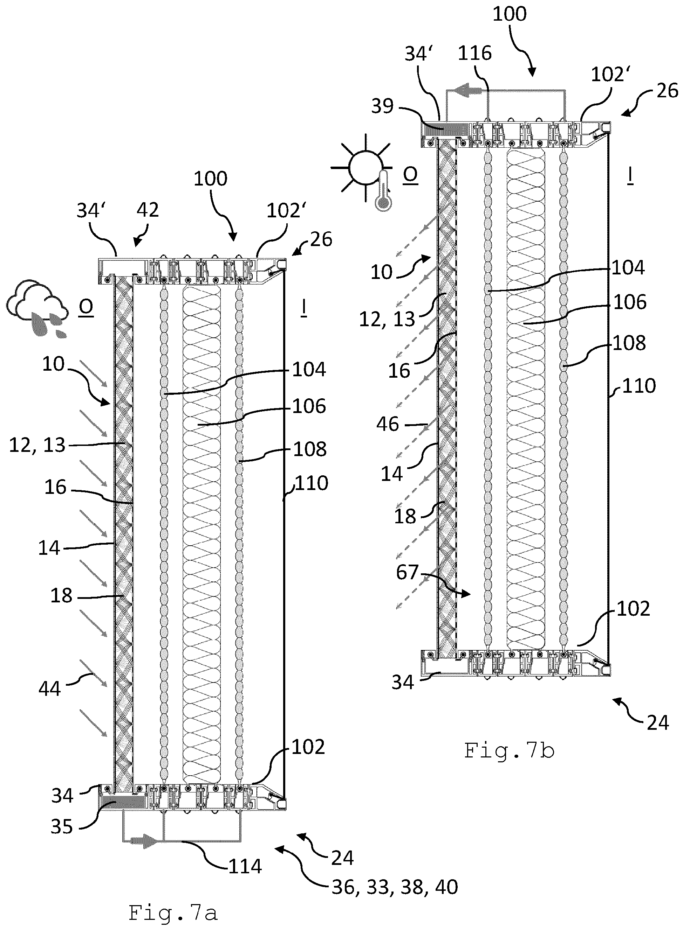

Figures 7a and 7b show the operation of the multi-layer façade system 100 according to figure 6.

Figure 7a shows the multi-layer façade system 100 during rain or driving rain events when the apparatus 10 is absorbing precipitation water. When absorbing, precipitation water enters the textile element 12 of the apparatus 10 on the side of the first, water-permeable layer 14 (see arrows 44). Under the influence of gravity, absorbed precipitation water moves from the first, water-permeable layer 14 via the connecting threads 18 down to the second, water-guiding layer 16 to water collection or water drainage (water outflow) 35 e.g. to a reservoir, basin, gutter, or the like that may be integrated in the (lower) frame profile 34 of the water collecting device 24.

Via fluid connection 114, the absorbed precipitation water is led, e.g. by a pump 38, from the (lower) frame profile 34 to the fluid-flow-through layers 104, 108, where the absorbed precipitation water is stored and/or used for interior comfort purposes. From there, the stored water can be discharged later in time. The fluid connection 114 can be further connected to a filter 36 for filtering precipitation water and/or to a further water storage 33 e.g. to a water storage tank and/or to a pump 38 and/or to a water temperature control device (water heating and cooling) 40 and/or to a heat exchanger 42, 120.

Figure 7b shows the multi-layer façade system 100 during heat events when discharging water by evaporation. By means of fluid connection 116, water (e.g. water absorbed by the apparatus 10) stored in the fluid-flow-through layers 104, 108 and/or in a further water storage 33 e.g. in a water storage tank and/or water supplied by the public water supply network, is led into the water supply 39 e.g. into a gutter, pipe, tube, inflow line, funnel or the like that may be integrated in the (upper) frame profile 34' of the water supply device 26 arranged upstream of the textile element 12. From there, under the influence of gravity, the supplied water moves along the second, water-guiding layer 16 downwards in the textile element 12, moving to the first, water-permeable layer 14 via the connecting threads 18. During this process, due to solar radiation and heat prevailing on the outside O of the façade system 100, the water evaporates in and on the apparatus 10 e.g. in and on the textile element 12 (see arrows 46). The phase transition of the water from a liquid to a vapour state releases cooling energy. Thus, the effect of heat loads on the outside O can be reduced.

Alternatively or in addition to water supply 39 of water supply device 26, in order to optimize evaporation behaviour by creating a homogenously wetted evaporator surface, an (additional) water supply device 67 can be provided. This allows water to be supplied to the textile element 12 punctually or linearly preferably at several places and/or at different heights. The water supply device 67 may comprise one or several injectors e.g. water jets, (perforated) pipes or hoses arranged side by side along the height and/or the width of the apparatus 10 e.g. of the textile element 12 (not shown). In another embodiment, the water supply device 67 may be configured as a planar perforated water supply device e.g. the fluid-flow-through layer 104 can be perforated and connected to the apparatus 10 e.g. to the textile element 12 via the second, water-guiding layer 16 in perforated configuration, in such way, that by regulating the pressure inside of the fluid-flow-through layer 104 water is homogenously supplied from the fluid-flow-through layer 104 into the textile element 12. Preferably the water supply device 67 can be flow-connected with the water supply device 26 via the profile system 102', the frame profile 34', the water supply conduit 22 and/or via fluid connection 116. Also, the water supply device 67 can be flow-connected with the water collecting device 24 via the profile system 102, the frame profile 34, the water discharge conduit 20 and/or via fluid connection 114.

Water, which moves to the water collection or water drainage (water outflow) 35 and/or to the (lower) frame profile 34 through the textile element 12, can be fed back to the fluid-flow-through layers 104, 108 and/or back to the water supply device 26 and/or to the water supply device 67 via the fluid connection 114.

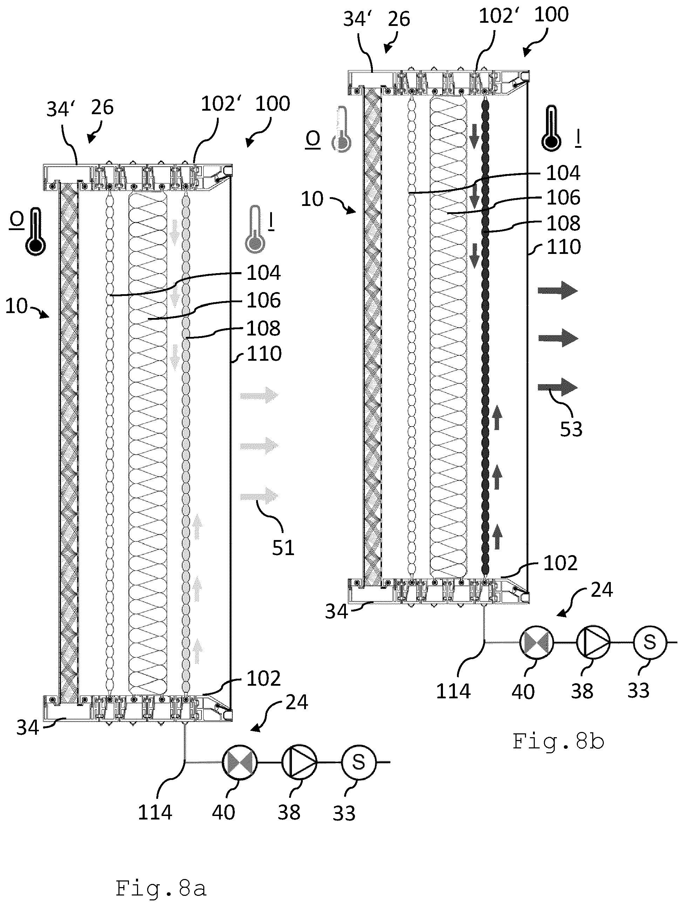

Figures 8a and 8b show another use of the multi-layer façade system 100 according to figure 6.

In the representation of the enclosed figures below, the light gray color indicates cool, low temperatures whereas the dark gray color symbolizes warm, high temperatures.

Figure 8a shows the multi-layer façade system 100 with temperature control of individual fluid-flow-through layers for regulation of interior wall surface temperatures in hot weather conditions, e.g. in summer. In this embodiment, cooled water flows through the second fluid-flow-through layer 108, which is located on the side of the insulation layer 106 facing the interior (inside) I. For this purpose, water that has been absorbed by the apparatus 10 and/or stored in a water storage 33 e.g. in a water storage tank and/or in the first fluid-flow-through layer 104 and/or water supplied by the public water supply network can be cooled by the water temperature control device (water heating and cooling) 40, which is connected to fluid connection 114 and/or to fluid connection 116 and can be fed to the second fluid-flow-through layer 108, e.g. by means of a pump 38. When the water moves along the second fluid-flow-through layer 108, the interior I can be cooled (see arrows 51). This contributes to comfortable indoor climate as well as energy savings in hot weather conditions, e.g. in summer. The cooled water is fed, e.g. by a pump 38, from the fluid connection 114 via the profile system 102 into the second fluid-flow-through layer 108, where it moves upwards to the profile system 102' or the cooled water is supplied from the fluid connection 116 via the (upper) profile system 102' into the second fluid-flow-through layer 108, where it moves downwards to the profile system 102.

Figure 8b shows the multi-layer façade system 100 with temperature control of individual fluid-flow-through layers for regulation of interior wall surface temperatures in cold weather conditions, e.g. in winter. In this embodiment, heated water flows through the second fluid-flow-through layer 108, which is located on the side of the insulation layer 106 facing the interior (inside) I. For this purpose, water that has been absorbed by the apparatus 10 and/or stored in a water storage 33 e.g. in a water storage tank and/or in the first fluid-flow-through layer 104 and/or water supplied by the public water supply network can be heated by the water temperature control device (water heating and cooling) 40, which is connected to fluid connection 114 and/or to fluid connection 116 and can be fed to the second fluid-flow-through layer 108, e.g. by means of a pump 38. When the water moves along the second fluid-flow-through layer 108, heat energy is transferred to the interior I (see arrows 53). This contributes to comfortable indoor climate as well as energy savings in cold weather conditions, e.g. in winter. The heated water is fed, e.g. by a pump 38, from the fluid connection 114 via the profile system 102 into the second fluid-flow-through layer 108, where it moves upwards to the profile system 102' or the heated water is supplied from the fluid connection 116 via the (upper) profile system 102' into the second fluid-flow-through layer 108, where it moves downwards to the profile system 102.

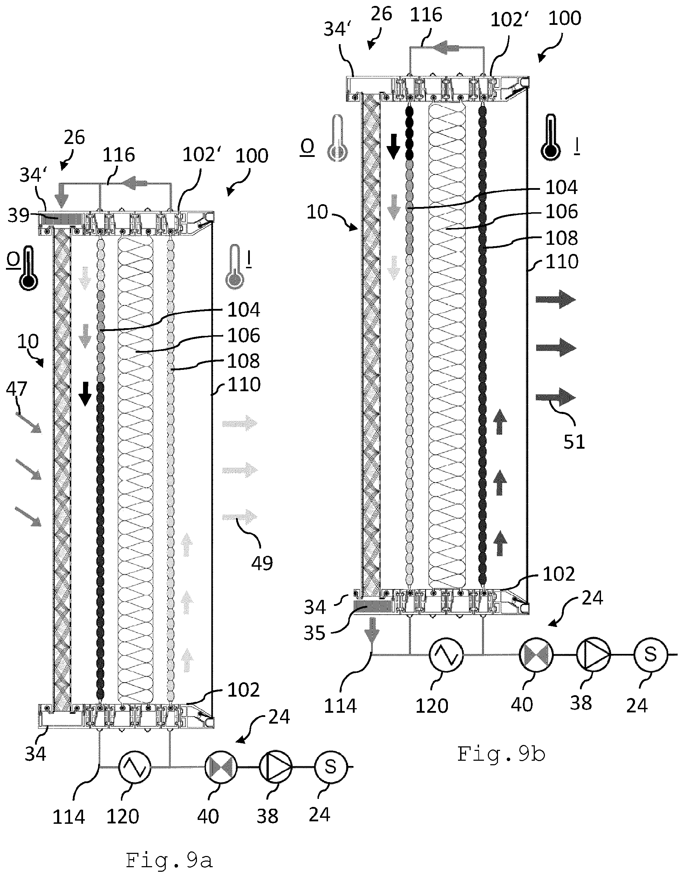

Figures 9a and 9b show another use of the multi-layer façade system 100 according to figure 6.

Figure 9a shows the multi-layer façade system 100 when being used as a thermal collector. Via the fluid connection 116, water is led to the first fluid-flow-through layer 104 via the (upper) profile system 102' and/or to the apparatus 10 e.g. to the textile element 12 via water supply device 26 e.g. via the (upper) frame profile 34' and/or via water supply device 67. From there, the water moves downwards the first fluid-flow-through layer 104 to the (lower) profile system 102 and/or downwards the apparatus 10 e.g. downwards the textile element 12 along the second, water-guiding (water-repellent) layer 16 to the first, water-permeable layer 14 via the connecting threads 18 and/or to the (lower) frame profile 34. By this process the water is warmed by the energy of the solar radiation (see arrows 47). Heat can be extracted from the warmed water by a heat exchanger 42, 120 and/or by the water temperature control device (water heating and cooling) 40 coupled to the fluid connection 114, so that the water can be cooled down. The cooled water is fed, e.g. by a pump 38, via the (lower) profile system 102 into the second fluid-flow-through layer 108, from where it moves upwards and passes through the fluid connection 116 via the (upper) profile system 102' again to the first fluid-flow-through layer 104 and/or via water supply device 26 e.g. the (upper) frame profile 34' and/or via water supply device 67 to the apparatus 10 e.g. to the textile element 12. Thus the fluid-flow-through layer 104 on the outside O of the insulation layer 106 absorbs and dissipates heat energy from solar radiation.

The fluid-flow-through layer 108 on the inside I of the insulation layer 106 is fed with cool water to reduce the interior temperature (see arrows 49). This contributes to energy savings for interior conditioning as well as to a comfortable indoor climate in hot weather conditions.

The flow direction of the fluid-flow-through layers 104, 108 can also be reversed (not shown). In this case, water is led via the fluid connection 114 to the first fluid-flow-through layer 104 via the (lower) profile system 102. From there, the water is pumped upwards the first fluid-flow-through layer 104 to the (upper) profile system 102'. By this process the water is warmed by the energy of the solar radiation (see arrows 47). Heat can be extracted from the warmed water by a heat exchanger 42, 120 and/or by the water temperature control device (water heating and cooling) 40 coupled to the fluid connection 116, so that the water can be cooled down. The cooled water is fed via the (upper) profile system 102' into the second fluid-flow-through layer 108, from where it moves downwards and passes through the fluid connection 114 via the (lower) profile system 102 again to the first fluid-flow-through layer 104. Thus the fluid-flow-through layer 104 on the outside O of the insulation layer 106 absorbs and dissipates heat energy from solar radiation. The fluid-flow-through layer 108 on the inside I of the insulation layer 106 is fed with cool water to reduce the interior temperature (see arrows 49). This contributes to energy savings for interior conditioning as well as to a comfortable indoor climate in hot weather conditions.

Figure 9b shows the multi-layer façade system 100 when being used for temperature control of the fluid-flow-through layers 104, 108 in order to influence the heat flux of the façade to the outside O. Water is heated by the heat exchanger 42, 120 and/or by the water temperature control device (water heating and cooling) 40 coupled to the fluid connection 114 and/or to the fluid connection 116. The heated water is fed, e.g. by a pump 38, from the fluid connection 114 via the profile system 102 and/or from the fluid connection 116 via the profile system 102' into the second fluid-flow-through layer 108, from where it moves upwards and/or downwards. Thereby, heat energy is transferred to the interior (inside) I (see arrows 51).

Either, at the upper part of the profile system 102', the heated water passes through the fluid connection 116 to the first fluid-flow-through layer 104, from where the heated water moves to the lower part of the profile system 102, e.g. by gravity. Otherwise, the heated water can also be fed through the fluid connection 114 via the (lower) profile system 102 into the first fluid-flow-through layer 104, from where the heated water moves upwards to the (upper) profile system 102' e.g. by a pump 38. Due to the cold prevailing in the outside O, water is cooled down, as thermal energy contained in the water of the first fluid-flow-through layer 104 is transferred to the environment.

By the temperature control of the fluid-flow-through layers 104, 108 the heat flux trough the multi-layer façade system 100 can be reduced. This contributes to energy savings for interior conditioning as well as a comfortable indoor climate during cold weather conditions.

Figures 10a and 10b show a possible modification of the multi-layer façade system 100 according to figure 6. The façade system 100 largely corresponds to the configuration described in Figure 6, so that reference is made to the explanations there in order to avoid repetition.

In contrast, the present multi-layer façade system 100 has a further apparatus 10' corresponding to apparatus 10 according to figure 1. The further apparatus 10' forms an inner layer 110' of the façade system 100, wherein the first (water-permeable) layer 14' of the textile element 12' of the further apparatus 10' faces the interior (inside) I. Thus, the further apparatus 10' is in laterally reversed orientation in comparison to the first apparatus 10.

The frame profile 34'' and 34‴ of the further apparatus 10' is connected to the modular profile system 102, 102' of the façade system 100. The textile element 12', being designated as or embodying a three-dimensional textile structure 13' of the further apparatus 10', is fluidically connected with fluid connection 116' e.g. via the (upper) frame profile 34‴. Furthermore, the textile element 12' of the further apparatus 10' is flow-connected with fluid connection 114' e.g. via the (lower) frame profile 34'' of the further apparatus 10'.

Figure 10b shows the multi-layer façade system 100 when discharging water by evaporation, e.g. during hot weather conditions. Via fluid connection(s) 116, 116', water is supplied to the profile system 102' and/or to the frame profile(s) 34', 34‴ of the water supply device(s) 26, 26' arranged upstream of the textile element(s) 12, 12' and/or via water supply device(s) 67, 67' directly to the textile element(s) 12, 12'. The water supplied to the textile element(s) 12, 12' may be water that has been absorbed earlier by the apparatus 10 and/or water provided to the multi-layer façade system 100 by public water supply network.

For evaporating, water enters the textile element(s) 12, 12' from the frame profile(s) 34', 34‴. Under the influence of gravity, the supplied water moves downwards along the second, water-guiding (water-repellent) layer(s) 16, 16' in the textile element(s) 12, 12' to the first layer(s) 14, 14' via the connecting threads 18, 18'. During this process the water in and on the apparatus 10, 10' e.g. in and on the textile element(s) 12, 12' evaporates due to solar radiation and heat prevailing on the outside O of the apparatus 10 (see arrows 55) and/or due to heat at the inside I of the apparatus 10' in the interior of a building (see arrows 56). The evaporation process in apparatus 10 and/or in further apparatus 10' causes corresponding cooling energy to be released, which reduces the effect of heat loads on the outside O and/or on the inside I of the multi-layer façade system 100.

In configuration with a first, water-permeable layer 14', the water, which is discharged by the further apparatus 10' facing the interior (inside) I, can be further used to humidify interior air. Otherweise in configuration with a first, water-impermeable layer 14' and/or a water-impermeable layer that is (additively) applied to the first layer 14' (not shown) the evaporated water can be retained and drained off inside of the apparatus 10' e.g. inside of the textile element 12' in order to avoid and/or to reduce humidification of the interior I. In this embodiment, water and air flow inside of apparatus 10' causes cooling energy, thus reducing the surface temperature of layer 14' facing the inside I without releasing humidity to the interior.

In an appropriate manner, in order to improve evaporation behaviour, additional, finer-pored textile layer(s) for encapsulating more water, e.g. multifilament and/or nonwoven fabric(s) and/or superabsorber(s) or the like (not shown), can be applied between the second layer(s) 16, 16' of the textile element(s) 12, 12' and the optionally (separate) applied water-guiding (water-repellent) layer(s), thus contributing to more homogeneous wetting and higher evaporative cooling while reducing water consumption.

Optionally, in configuration with a first, water-impermeable layer 14' of apparatus 10' facing the interior, an additional, finer-pored textile layer for encapsulating more water, e.g. a multifilament and/or a nonvowen fabric and/or a superabsorber or the like (not shown), as well can be applied between the first layer 14' of the textile element 12' and the optionally (separate) applied water-impermeable layer (not shown), thus contributing to more homogeneous wetting and higher evaporative cooling while reducing water consumption.

In an advantageous way, apparatus 10 and apparatus 10' can be operated simultaneously i.e. mutually together or independently, i.e. separately from each other. When only activating apparatus 10' for interior cooling and/or interior air humidification, water is supplied via fluid connection 116' only to water supply device 26' e.g.to frame profile 34''' and/or to water supply device 67' of the textile element 12'. For an equivalent activation of only apparatus 10, reference is made to the explanation of figure 7b in order to avoid repetition.

Alternatively or in addition to water supply device(s) 26, 26' e.g. via the frame profile(s) 34', 34''', (additional) water supply device(s) 67, 67' can be provided. This allows water to be supplied to the textile element(s) 12, 12' punctually or linearly preferably at several places and/or at different heights. The water supply device(s) 67, 67' may comprise one or several injectors e.g. water jets, (perforated) pipes or hoses arranged side by side along the height and/or the width of the apparatus 10, 10' e.g. of the textile element(s) 12, 12'. In another embodiment, the water supply device(s) 67, 67' may be configured as planar perforated water supply device(s) e.g. the fluid-flow-through layers 104 and/or 108 can be perforated and connected to the apparatus 10, 10' e.g. to the textile element(s) 12, 12' via the second, water-guiding layer(s) 16, 16' in perforated configuration, in such way, that by regulating the pressure inside of the fluid-flow-through layers 104 and/or 108 water is homogenously supplied from the fluid-flow-through layers 104 and/or 108 into the textile element(s) 12, 12'. Preferably the water supply device(s) 67, 67' can be flow-connected with the water supply device(s) 26, 26' e.g. with the frame profile(s) 34', 34‴ via the profile system 102', via water supply conduit(s) 22, 22' and/or via fluid connection(s) 116, 116'. Also, the water supply device(s) 67, 67' can be flow-connected with the water collecting device(s) 24, 24' e.g. with the frame profile(s) 34, 34'' via the profile system 102, via water discharge conduit(s) 20, 20' and/or via fluid connection(s) 114, 114'. The evaporation of water can be optimized by homogeneous water wetting of the evaporator surface with regard to the water distribution and quantity by means of the water supply device(s) 67, 67'.

Figure 11 shows a possible modification of the multi-layer façade system 100 according to figure 6. The façade system 100 largely corresponds to the configuration described in Figure 6, so that reference is made to the explanations there in order to avoid repetition.

In contrast, the present multi-layer façade system 100 comprises an apparatus 10 according to figure 1 that has been modified. The textile element 12 comprises folding structures 28, 28', 28'' that divide the textile element 12 into several foldable, folded, pivotable and/or rotatable sections 30, 30', 30'', 30‴.

The foldable, folded, pivotable and/or rotatable sections 30, 30', 30'', 30‴ can be operated by actuators 32, 32', 32'' e.g. by linear and/or rotational actuators. On one end, the actuators 32, 32', 32'' are connected to a mechanical substructure 57 e.g. of steel, wood, aluminium and/or polymer or the like or combinations thereof, that is attached to the profile system 102, 102' and/or to the frame profile 34, 34' and/or to the holding device 92 of the apparatus 10. On the other end, the actuators 32, 32', 32'' are connected to the textile element 12 e.g. to the folding structures 28, 28', 28'' so that sections 30, 30', 30'', 30‴ can be folded, pivoted and/or rotated when the actuators 32, 32', 32'' are operated. Between the textile element 12 and the mechanical substructure 57, an air space (air layer) 69 is arranged.

By actuating the folding structures, the collector and/or evaporator surface can be maximized and specifically adjusted, e.g. to the respective angle of the precipitation water drops and/or to the solar incidence angle. In this way, water absorption and drainage behaviour as well as water discharge and evaporation behaviour can be improved. The actuation can be operated in a manual or automatically in an adaptive way by integrating sensors, actuators and a control unit.

As explained above, sensors (not shown) for recording climate and/or environmental data (e.g. ambient temperature, humidity, solar radiation, wind data and/or rain data) and/or a control unit for operating and/or regulating the actuators 32, 32', 32'' can be provided. The control unit (not shown) can be configured in such a way that the apparatus 10 and/or the textile element 12 and/or sections 30, 30', 30'', 30‴ thereof are adjusted towards impacting precipitation water and/or towards solar incidence automatically. This helps to maximize the performance of the apparatus.

The control unit (not shown) can be configured to interact with one or several sensors and with actuators 32, 32', 32''. The operation of the apparatus and/or of the textile element 12 and/or of sections 30, 30', 30'', 30‴ can be monitored with one or several further sensors. A method e.g. a software is implemented on the control unit for operating the apparatus 10 and/or the multi-layer façade system 100.

Optionally the folding structures can be introduced into the textile element as well by means of additive and/or subtractive manufacturing methods e.g. by textile (3D) printing and/or by textile connecting devices.

Folded structures can also be introduced in the apparatus 10 and/or in the textile element 12 without actuation simply to maximize the absorbing (collecting) and/or discharging (evaporating) surface area of the apparatus 10 e.g. of the textile element 12. In this case the system is only passive. The amount of folding structures e.g. the size of their sections is unlimited.

## Claims

1. Apparatus (10) for absorbing precipitation water from rain events, especially from driving rain events, and for water discharge by evaporation, **characterized by** at least one textile element (12) for absorbing water from rainwater drops and for discharging water by evaporation, wherein the textile element (12) is designed as a three-dimensional textile structure (13), with a first, water-permeable layer (14) and a second, water-guiding, i.e. water-repellent, layer (16), wherein these layers (14, 16) are connected to one another by means of water-guiding, connecting threads (18), wherein the textile element (12) is fluidically connected to a water discharge conduit (20) and/or to a water supply conduit (22).

2. Apparatus (10) according to claim 1, **characterized in that** a water collecting device (24) is provided which is flow-connected to the textile element (12) and/or to the water discharge conduit (20) and/or **characterized in that** a water supply device (26, 67) is provided which is flow-connected to the textile element (12) and/or to the water supply conduit (22).

3. Apparatus (10) according to one of the preceding claims, **characterized in that** the apparatus (10) and/or the textile element (12) comprises hydrophilic and/or hydrophobic modifications and/or **characterized in that** the textile element (12) i.e. the three-dimensional textile structure (13) is preferably formed from synthetic fibre, polymer fibre, glass fibre, metal fibre and/or other appropriate materials, being embodied as monofilaments or multifilaments.

4. Apparatus (10) according to one of the preceding claims, **characterized in that**
- the first layer (14) has a water-attracting and/or hydrophilic lamination, coating, finishing, filament shape optimization or
- that a water-attracting layer is applied to the first layer (14), wherein this applied water-attracting layer and/or the first layer (14) are of finer-pored design than the spacing structure (19) formed by the connecting threads (18) between the first layer (14) and the second layer (16) and/or
- **characterized in that** the second layer (16) has a water-guiding and/or hydrophobic lamination, coating, finishing and/or filament shape optimization or
- that a water-guiding layer is applied to the second layer (16), wherein this applied water-guiding layer and/or the second layer (16) are water-tight or perforated.

5. Apparatus (10) according to one of the preceding claims, **characterized in that** one or more actuators are provided, wherein the first layer (14) and/or the second layer (16) are configured to be actuatable by the one or more actuators along a direction parallel to the plane of the first layer (14) or the second layer (16), so that the first layer (14) and the second layer (16) can be displaced relatively to one another.

6. Apparatus (10) according to one of the preceding claims, **characterized in that**
- the apparatus (10) and/or the textile element (12) comprise folding structures (28, 28', 28'') which divide the apparatus (10) and/or the textile element (12) into several foldable, folded, pivotable or rotatable sections (30, 30', 30'', 30‴) and/or
- **characterized in that** the apparatus (10) and/or the textile element (12) are planar, curved, folded or adaptable in shape.

7. Apparatus (10) according to claim 6, **characterized in that**
- the folding structures (28, 28', 28'') have a mechanical substructure (57) or are introduced into the textile element (12) by means of additive or subtractive manufacturing methods e.g. (3D) printing on textile substrate fabric and/or
- **in that** the folding structures (28, 28', 28'') are embodied by textile connecting devices.

8. Apparatus (10) according to claim 6 or 7, **characterized in that** actuators (32, 32', 32'') are provided, by means of which the foldable, folded, pivotable and/or rotatable sections (30, 30', 30'', 30‴) can be operated.

9. Apparatus (10) according to claim 8, **characterized in that** a control unit for operating and/or regulating the actuators (32, 32', 32'') is provided, wherein the control unit is configured in such a way that the apparatus (10) and/or the textile element (12) and/or sections (30, 30', 30'', 30‴) thereof are oriented towards precipitation and/or solar radiation.

10. Apparatus (10) according to one of the preceding claims, **characterized in that** a holding device is provided to which the components of the apparatus (10) are attached or attachable and/or **characterized in that** sensors are provided, by means of which climate and/or environmental data are recorded e.g. for a control unit.

11. Apparatus (10) according to one of claims 2 to 10, **characterized in that** the water collecting device (24) comprises a frame profile (34, 34') and/or a water storage (33) for storing precipitation water.

12. Apparatus (10) according to one of claims 2 to 11, **characterized in that** a filter (36) for filtering precipitation water is provided, wherein the filter (36) is integrated into the textile element (12) and/or arranged in or on the water collecting device (24) and/or in the building and/or **characterized in that** a pump (38) and/or a water temperature control device (40) are provided, which are each flow connected with the water supply device (26, 67) and/or with the water collecting device (24).

13. Apparatus (10) according to one of claims 2 to 12, **characterized in that** the water supply device (26, 67) and/or the water collecting device (24) is connected to a heat exchanger (42, 120).

14. Usage of an apparatus (10) according to one of the preceding claims as a construction element inside, on or outside a building or a civil engineering structure (50, 60, 70).

15. Usage of at least one apparatus (10) according to one of claims 1 to 13 on or in the façade of a new building and/or of an existing building (80) as additive element on a conventional existing façade (82).

16. Façade system (100) for separating a building interior (inside) I from an exterior space (outside) O, including an apparatus (10) according to one of claims 1 to 13, whereas the façade system (100) is optionally constructed in one or more layers (104, 106, 108, 110) and/or modularly.

17. Façade system (100) according to claim 16, **characterized in that** on the side on which the second textile layer (16) of the textile element (12) of the apparatus (10) is located, the façade system (100) has at least one fluid-flow-through layer (104, 108) and/or an insulation layer (106) and/or an inner layer (110) and/or **characterized in that** two fluid-flow-through layers (104, 108) are provided, wherein the first fluid-flow-through layer (104) is arranged on one side of the insulation layer (106) and the second fluid-flow-through layer (108) is arranged on the other side of the insulation layer (106).

18. Façade system (100) according to claim 17, **characterized in that** one of the two or both fluid-flow-through layers (104, 108) are configured and intended as a thermal collector and/or used as a temperature control device of the building interior wall surfaces, as a regulation device of the air humidity, as a regulation device of the acoustic and sound insulation properties and/or as an active fire protection measures device.

19. Façade system (100) according to one of claims 16 to 18, **characterized in that** a further apparatus (10') according to one of claims 1 to 13 is provided, said further apparatus (10') forming an inner layer of the façade system, wherein the first layer (14') of the textile element (12') of the further apparatus (10') faces the building interior (inside) I and/or **characterized in that** the façade system (100) comprises a preferably modular profile system (102, 102') to which the components of the façade system (100) and/or the holding device of the apparatus (10) according to claim 10 and/or the frame profile (34, 34') of the apparatus (10) according to claim 11 are attached or attachable.

20. Method for operating an apparatus (10) according to one of claims 1 to 13 and/or a façade system (100) according to one of claims 16 to 19 on a building, **characterized in that** precipitation water is supplied to a use in, on or outside the building.

21. Method according to claim 20, **characterized in that** water and/or precipitation water is discharged via the textile element (12) by evaporation, and/or **characterized in that** the precipitation water is supplied to consumer in, on or outside the building in the form of raw water and/or that the precipitation water is processed into drinking water.

22. Method according to one of claims 20 to 21, **characterized in that** the precipitation water is used for interior conditioning of buildings in terms of temperature and air humidity regulation, for regulation of the acoustic and sound insulation properties and/or for active fire protection measures and/or **characterized in that** the precipitation water is discharged to the public water supply network and/or delivered to neighbouring buildings and/or civil engineering structures, especially in the case of excess precipitation water yields.

23. Method for controlling and/or regulating
an apparatus (10) according to one of claims 1 to 13 and/or a façade system (100) according to one of claims 16 to 19, the method comprising the following steps:
- retrieving forecast weather data from a weather service for a defined time period,
- estimating the consumption of drinking water, raw water and/or grey water in, on or outside a building or civil engineering structure for the defined time period by means of water consumption analysis in, on or outside the building or civil engineering structure via a flow meter, and
- comparing the estimated consumption of drinking water, raw water and/or grey water with expected precipitation water yields from the forecast weather data.

24. Method according to claim 23, **characterized by** determining the amount of water required for evaporative cooling of the façade, the air space close to the façade and/or the urban space and/or **characterized by** determining the amount of drinking water, raw water and/or grey water required in, on or outside the building or civil engineering structure.

25. Method according to one of claims 23 to 24, **characterized by** determining the amount of water required for interior conditioning and/or **characterized by** determining the amount of water required for the use of plant-specific active fire protection measures.

26. A method according to one of claims 23 to 25, **characterized by** delivering excess water to neighbouring buildings or civil engineering structures and/or by feeding excess water into the public water supply network.

## Patentansprüche

1. Einrichtung (10) zum Aufnehmen von Niederschlagswasser aus Regenereignissen, insbesondere aus Schlagregenereignissen, und für eine Wasserabgabe durch Verdunstung, **gekennzeichnet durch** mindestens ein Textilelement (12) zum Aufnehmen von Wasser aus Regenwassertropfen und zum Abgeben von Wasser durch Verdunstung, wobei das Textilelement (12) als eine dreidimensionale Textilstruktur (13) konstruiert ist, mit einer ersten, wasserdurchlässigen Schicht (14) und einer zweiten, wasserführenden, d.h. wasserabweisenden, Schicht (16), wobei diese Schichten (14, 16) mittels wasserführender Verbindungsfäden (18) miteinander verbunden sind, wobei das Textilelement (12) mit einer Wasserabgabeleitung (20) und/oder mit einer Wasserversorgungsleitung (22) fluidisch verbunden ist.

2. Einrichtung (10) nach Anspruch 1, **dadurch gekennzeichnet, dass** eine Wasserauffangvorrichtung (24) bereitgestellt ist, die mit dem Textilelement (12) und/oder mit der Wasserabgabeleitung (20) strömungsverbunden ist und/oder **dadurch gekennzeichnet, dass** eine Wasserversorgungsvorrichtung (26, 67) bereitgestellt ist, die mit dem Textilelement (12) und/oder mit der Wasserversorgungsleitung (22) strömungsverbunden ist.

3. Einrichtung (10) nach einem der vorstehenden Ansprüche, **dadurch gekennzeichnet, dass** die Einrichtung (10) und/oder das Textilelement (12) hydrophile und/oder hydrophobe Modifikationen aufweist und/oder **dadurch gekennzeichnet, dass** das Textilelement (12), d.h. die dreidimensionale Textilstruktur (13), vorzugsweise aus Kunstfaser, Polymerfaser, Glasfaser, Metallfaser und/oder anderen geeigneten Materialien gebildet ist, die als Monofilamente oder Multifilamente verkörpert sind.

4. Einrichtung (10) nach einem der vorstehenden Ansprüche, **dadurch gekennzeichnet, dass**
- die erste Schicht (14) eine wasseranziehende und/oder hydrophile Kaschierung, Beschichtung, Veredelung, Filamentformoptimierung aufweist oder
- dass eine wasseranziehende Schicht auf der ersten Schicht (14) aufgebracht ist, wobei diese aufgebrachte wasseranziehende Schicht und/oder die erste Schicht (14) aus einer feinporigeren Konstruktion als die durch die Verbindungsfäden (18) gebildete Abstandsstruktur (19) zwischen der ersten Schicht (14) und der zweiten Schicht (16) bestehen und/oder
- **dadurch gekennzeichnet, dass** die zweite Schicht (16) eine wasserführende und/oder hydrophobe Kaschierung, Beschichtung, Veredelung und/oder Filamentformoptimierung aufweist oder
- dass eine wasserführende Schicht auf der zweiten Schicht (16) aufgebracht ist, wobei diese aufgebrachte wasserführende Schicht und/oder die zweite Schicht (16) wasserdicht oder perforiert sind.

5. Einrichtung (10) nach einem der vorstehenden Ansprüche, **dadurch gekennzeichnet, dass** ein oder mehrere Betätigungselemente bereitgestellt sind, wobei die erste Schicht (14) und/oder die zweite Schicht (16) konfiguriert sind, um durch das eine oder die mehreren Betätigungselemente entlang einer Richtung parallel zu der Ebene der ersten Schicht (14) oder der zweiten Schicht (16) betätigbar zu sein, sodass die erste Schicht (14) und die zweite Schicht (16) relativ zueinander verschoben werden können.

6. Einrichtung (10) nach einem der vorstehenden Ansprüche, **dadurch gekennzeichnet, dass**
- die Einrichtung (10) und/oder das Textilelement (12) Faltstrukturen (28, 28', 28'') umfassen, die die Einrichtung (10) und/oder das Textilelement (12) in einige faltbare, gefaltete, schwenkbare oder drehbare Abschnitte (30, 30', 30'', 30‴) unterteilen und/oder
- **dadurch gekennzeichnet, dass** die Einrichtung (10) und/oder das Textilelement (12) in ihrer Form eben, gekrümmt, gefaltet oder anpassbar sind.

7. Einrichtung (10) nach Anspruch 6, **dadurch gekennzeichnet, dass**
- die Faltstrukturen (28, 28', 28'') eine mechanische Unterstruktur (57) aufweisen oder mittels additiver oder subtraktiver Fertigungsverfahren in das Textilelement (12) eingebracht sind, z.B. (3D-) Druck auf ein Textilsubstratgewebe, und/oder
- dass die Faltstrukturen (28, 28', 28'') durch Textilverbindungsvorrichtungen verkörpert sind.

8. Einrichtung (10) nach Anspruch 6 oder 7, **dadurch gekennzeichnet, dass** Betätigungselemente (32, 32', 32'') bereitgestellt sind, mittels derer die faltbaren, gefalteten, schwenkbaren und/oder drehbaren Abschnitte (30, 30', 30'', 30‴) betrieben werden können.

9. Einrichtung (10) nach Anspruch 8, **dadurch gekennzeichnet, dass** eine Steuereinheit zum Betreiben und/oder Regeln der Betätigungselemente (32, 32', 32'') bereitgestellt ist, wobei die Steuereinheit in einer derartigen Weise konfiguriert ist, dass die Einrichtung (10) und/oder das Textilelement (12) und/oder Abschnitte (30, 30', 30'', 30‴) davon auf Niederschlag und/oder Sonneneinstrahlung ausgerichtet sind.

10. Einrichtung (10) nach einem der vorstehenden Ansprüche, **dadurch gekennzeichnet, dass** eine Haltevorrichtung bereitgestellt ist, an der die Komponenten der Einrichtung (10) befestigt oder befestigbar sind und/oder **dadurch gekennzeichnet, dass** Sensoren bereitgestellt sind, mittels derer Klima- und/oder Umweltdaten erfasst werden, z.B. für eine Steuereinheit.

11. Einrichtung (10) nach einem der Ansprüche 2 bis 10, **dadurch gekennzeichnet, dass** die Wasserauffangvorrichtung (24) ein Rahmenprofil (34, 34') und/oder einen Wasserspeicher (33) zum Speichern von Niederschlagswasser umfasst.

12. Einrichtung (10) nach einem der Ansprüche 2 bis 11, **dadurch gekennzeichnet, dass** ein Filter (36) zum Filtern von Niederschlagswasser bereitgestellt ist, wobei der Filter (36) in das Textilelement (12) integriert ist und/oder in oder an der Wasserauffangvorrichtung (24) und/oder in dem Gebäude angeordnet ist und/oder **dadurch gekennzeichnet, dass** eine Pumpe (38) und/oder eine Wassertemperatursteuervorrichtung (40) bereitgestellt sind, die jeweils mit der Wasserversorgungsvorrichtung (26, 67) und/oder mit der Wasserauffangvorrichtung (24) strömungsverbunden sind.

13. Einrichtung (10) nach einem der Ansprüche 2 bis 12, **dadurch gekennzeichnet, dass** die Wasserversorgungsvorrichtung (26, 67) und/oder die Wasserauffangvorrichtung (24) mit einem Wärmetauscher (42, 120) verbunden ist.

14. Verwendung einer Einrichtung (10) nach einem der vorstehenden Ansprüche als ein Bauelement innerhalb, an oder außerhalb eines Gebäudes oder einer Tiefbaustruktur (50, 60, 70).

15. Verwendung mindestens einer Einrichtung (10) nach einem der Ansprüche 1 bis 13 an oder in der Fassade eines Neubaus und/oder eines Bestandsgebäudes (80) als additives Element an einer herkömmlichen Bestandsfassade (82).

16. Fassadensystem (100) zum Trennen eines Gebäudeinnenbereichs (innerhalb) I von einem Außenraum (außerhalb) O, einschließlich einer Einrichtung (10) nach einem der Ansprüche 1 bis 13, wobei das Fassadensystem (100) optional in einer oder mehreren Schichten (104, 106, 108, 110) und/oder modular aufgebaut ist.

17. Fassadensystem (100) nach Anspruch 16, **dadurch gekennzeichnet, dass** das Fassadensystem (100) auf der Seite, auf der sich die zweite Textilschicht (16) des Textilelements (12) der Einrichtung (10) befindet, mindestens eine Fluiddurchströmungsschicht (104, 108) und/oder eine Isolierschicht (106) und/oder eine innere Schicht (110) aufweist und/oder **dadurch gekennzeichnet, dass** zwei Fluiddurchströmungsschichten (104, 108) bereitgestellt sind, wobei die erste Fluiddurchströmungsschicht (104) auf einer Seite der Isolierschicht (106) und die zweite Fluiddurchströmungsschicht (108) auf der anderen Seite der Isolierschicht (106) angeordnet ist.

18. Fassadensystem (100) nach Anspruch 17, **dadurch gekennzeichnet, dass** eine der zwei oder beide Fluiddurchströmungsschichten (104, 108) als ein thermischer Kollektor konfiguriert und vorgesehen sind und/oder als eine Temperatursteuervorrichtung der Gebäudeinnenwandoberflächen, als eine Regelungsvorrichtung der Luftfeuchtigkeit, als eine Regelungsvorrichtung der akustischen und Schallisoliereigenschaften und/oder als eine Vorrichtung für aktive Brandschutzmaßnahmen verwendet werden.

19. Fassadensystem (100) nach einem der Ansprüche 16 bis 18, **dadurch gekennzeichnet, dass** eine weitere Einrichtung (10') nach einem der Ansprüche 1 bis 13 bereitgestellt ist, wobei die weitere Einrichtung (10') eine innere Schicht des Fassadensystems bildet, wobei die erste Schicht (14') des Textilelements (12') der weiteren Einrichtung (10') dem Gebäudeinnenbereich (innerhalb) I zugewandt ist und/oder **dadurch gekennzeichnet, dass** das Fassadensystem (100) ein vorzugsweise modulares Profilsystem (102, 102') umfasst, an dem die Komponenten des Fassadensystems (100) und/oder die Haltevorrichtung der Einrichtung (10) nach Anspruch 10 und/oder das Rahmenprofil (34, 34') der Einrichtung (10) nach Anspruch 11 befestigt oder befestigbar sind.

20. Verfahren zum Betreiben einer Einrichtung (10) nach einem der Ansprüche 1 bis 13 und/oder eines Fassadensystems (100) nach einem der Ansprüche 16 bis 19 an einem Gebäude, **dadurch gekennzeichnet, dass** Niederschlagswasser einer Verwendung in, an oder außerhalb des Gebäudes zugeführt wird.

21. Verfahren nach Anspruch 20, **dadurch gekennzeichnet, dass** Wasser und/oder Niederschlagswasser durch Verdunstung über das Textilelement (12) abgegeben wird und/oder **dadurch gekennzeichnet, dass** das Niederschlagswasser in der Form von Rohwasser einem Verbraucher in, an oder außerhalb des Gebäudes zugeführt wird und/oder dass das Niederschlagswasser zu Trinkwasser aufbereitet wird.

22. Verfahren nach einem der Ansprüche 20 bis 21, **dadurch gekennzeichnet, dass** das Niederschlagswasser für eine Innenraumklimatisierung von Gebäuden im Sinne einer Temperatur- und Luftfeuchtigkeitsregulierung, für eine Regulierung der akustischen und Schallisoliereigenschaften und/oder für aktive Brandschutzmaßnahmen verwendet wird und/oder **dadurch gekennzeichnet, dass** das Niederschlagswasser in das öffentliche Wasserversorgungsnetz abgegeben und/oder an benachbarte Gebäude und/oder Tiefbaustrukturen geliefert wird, insbesondere in dem Fall von überschüssigen Niederschlagswassererträgen.

23. Verfahren zum Steuern und/oder Regeln einer Einrichtung (10) nach einem der Ansprüche 1 bis 13 und/oder eines Fassadensystems (100) nach einem der Ansprüche 16 bis 19, das Verfahren umfassend die folgenden Schritte:
- Abrufen von prognostizierten Wetterdaten von einem Wetterdienst für eine definierte Zeitperiode,
- Abschätzen des Verbrauchs an Trinkwasser, Rohwasser und/oder Grauwasser in, an oder außerhalb eines Gebäudes oder einer Tiefbaustruktur für die definierte Zeitperiode mittels Wasserverbrauchsanalyse in, an oder außerhalb des Gebäudes oder der Tiefbaustruktur über einen Strömungsmesser und
- Vergleichen des geschätzten Verbrauchs an Trinkwasser, Rohwasser und/oder Grauwasser mit den erwarteten Niederschlagswassererträgen aus den prognostizierten Wetterdaten.

24. Verfahren nach Anspruch 23, **gekennzeichnet durch** ein Bestimmen der benötigten Wassermenge zum Verdunstungskühlen der Fassade, des Luftraums nahe der Fassade und/oder des Stadtraums, und/oder **gekennzeichnet durch** das Bestimmen der benötigten Trinkwasser-, Rohwasser- und/oder Grauwassermenge in, an oder außerhalb des Gebäudes oder der Tiefbaustruktur.

25. Verfahren nach einem der Ansprüche 23 bis 24, **gekennzeichnet durch** das Bestimmen der benötigten Wassermenge für die Innenraumklimatisierung und/oder **gekennzeichnet durch** das Bestimmen der benötigten Wassermenge für die Verwendung anlagenspezifischer aktiver Brandschutzmaßnahmen.

26. Verfahren nach einem der Ansprüche 23 bis 25, **gekennzeichnet durch** ein Liefern von überschüssigem Wasser an benachbarte Gebäude oder Tiefbaustrukturen und/oder durch ein Einspeisen von überschüssigem Wasser in das öffentliche Wasserversorgungsnetz.

## Revendications

1. Appareil (10) permettant d'absorber l'eau de précipitation provenant d'événements de pluie, en particulier provenant d'événements de pluie battante, et d'évacuer l'eau par évaporation, **caractérisé par** au moins un élément textile (12) permettant d'absorber des gouttes d'eau de pluie et d'évacuer l'eau par évaporation, dans lequel l'élément textile (12) est conçu comme une structure textile tridimensionnelle (13), avec une première couche (14) perméable à l'eau et une seconde couche (16) guidant l'eau, c'est-à-dire hydrofuge, dans lequel ces couches (14, 16) sont reliées l'une à l'autre au moyen de fils de liaison (18) guidant l'eau, dans lequel l'élément textile (12) est relié fluidiquement à un conduit d'évacuation d'eau (20) et/ou à un conduit d'approvisionnement en eau (22).

2. Appareil (10) selon la revendication 1, **caractérisé en ce qu'**un dispositif de collecte d'eau (24) est fourni qui est relié en flux à l'élément textile (12) et/ou au conduit d'évacuation d'eau (20) et/ou **caractérisé en ce qu'**un dispositif d'approvisionnement en eau (26, 67) est fourni qui est relié en flux à l'élément textile (12) et/ou au conduit d'approvisionnement en eau (22).

3. Appareil (10) selon l'une des revendications précédentes, **caractérisé en ce que** l'appareil (10) et/ou l'élément textile (12) comprend des modifications hydrophiles et/ou hydrophobes et/ou **caractérisé en ce que** l'élément textile (12) c'est-à-dire la structure textile tridimensionnelle (13) est de préférence formé à partir de fibres synthétiques, de fibres polymères, de fibres de verre, de fibres métalliques et/ou d'autres matériaux appropriés, étant incarnés sous forme de monofilaments ou de multifilaments.

4. Appareil (10) selon l'une des revendications précédentes, **caractérisé en ce que**
- la première couche (14) a une stratification, un revêtement, une finition, une optimisation de forme de filament attirant l'eau et/ou hydrophiles ou
- **en ce qu'**une couche attirant l'eau est appliquée sur la première couche (14), dans lequel cette couche attirant l'eau appliquée et/ou la première couche (14) ont une conception à pores plus fins que la structure d'espacement (19) formée par les fils de liaison (18) entre la première couche (14) et la seconde couche (16) et/ou
- **caractérisé en ce que** la seconde couche (16) a une stratification, un revêtement, une finition et/ou une optimisation de forme de filament guidant l'eau et/ou hydrophobes ou
- **en ce qu'**une couche guidant l'eau est appliquée sur la seconde couche (16), dans lequel cette couche guidant l'eau appliquée et/ou la seconde couche (16) sont étanches à l'eau ou perforées.

5. Appareil (10) selon l'une des revendications précédentes, **caractérisé en ce qu'**un ou plusieurs actionneurs sont fournis, dans lequel la première couche (14) et/ou la seconde couche (16) sont configurées pour être actionnables par les un ou plusieurs actionneurs le long d'une direction parallèle au plan de la première couche (14) ou de la seconde couche (16), de sorte que la première couche (14) et la seconde couche (16) peuvent être déplacées l'une par rapport à l'autre.

6. Appareil (10) selon l'une des revendications précédentes, **caractérisé en ce que**
- l'appareil (10) et/ou l'élément textile (12) comprennent des structures pliantes (28, 28', 28'') qui divisent l'appareil (10) et/ou l'élément textile (12) en diverses sections pliables, pliées, pivotables ou rotatives (30, 30', 30'', 30''') et/ou
- **caractérisé en ce que** l'appareil (10) et/ou l'élément textile (12) sont plans, incurvés, pliés ou adaptables en forme.

7. Appareil (10) selon la revendication 6, **caractérisé en ce que**
- les structures pliantes (28, 28', 28'') ont une sous-structure mécanique (57) ou sont introduites dans l'élément textile (12) au moyen de procédés de fabrication additifs ou soustractifs par exemple par impression (3D) sur un tissu de substrat textile et/ou
- **en ce que** les structures pliantes (28, 28', 28") sont incarnées par des dispositifs de liaison textile.

8. Appareil (10) selon la revendication 6 ou 7, **caractérisé en ce que** des actionneurs (32, 32', 32'') sont fournis, au moyen desquels les sections pliables, pliées, pivotables et/ou rotatives (30, 30', 30", 30‴) peuvent être activées.

9. Appareil (10) selon la revendication 8, **caractérisé en ce qu'**une unité de contrôle pour l'activation et/ou la régulation des actionneurs (32, 32', 32'') est fournie, dans lequel l'unité de contrôle est configurée de telle sorte que l'appareil (10) et/ou l'élément textile (12) et/ou des sections (30, 30', 30", 30‴) de celui-ci sont orientés vers les précipitations et/ou le rayonnement solaire.

10. Appareil (10) selon l'une des revendications précédentes, **caractérisé en ce qu'**un dispositif de maintien est fourni auquel les composants de l'appareil (10) sont attachés ou attachables et/ou **caractérisé en ce que** des capteurs sont fournis, au moyen desquels des données climatiques et/ou environnementales sont enregistrées par exemple pour une unité de contrôle.

11. Appareil (10) selon l'une des revendications 2 à 10, **caractérisé en ce que** le dispositif de collecte d'eau (24) comprend un profilé de cadre (34, 34') et/ou un stockage d'eau (33) permettant de stocker l'eau de précipitation.

12. Appareil (10) selon l'une des revendications 2 à 11, **caractérisé en ce qu'**un filtre (36) permettant de filtrer l'eau de précipitation est fourni, dans lequel le filtre (36) est intégré à l'élément textile (12) et/ou agencé dans ou sur le dispositif de collecte d'eau (24) et/ou dans le bâtiment et/ou **caractérisé en ce qu'**une pompe (38) et/ou un dispositif de contrôle de température d'eau (40) sont fournis, qui sont chacun reliés en flux au dispositif d'approvisionnement en eau (26, 67) et/ou au dispositif de collecte d'eau (24).

13. Appareil (10) selon l'une des revendications 2 à 12, **caractérisé en ce que** le dispositif d'approvisionnement en eau (26, 67) et/ou le dispositif de collecte d'eau (24) est relié à un échangeur de chaleur (42, 120).

14. Utilisation d'un appareil (10) selon l'une des revendications précédentes comme un élément de construction à l'intérieur, sur ou à l'extérieur d'un bâtiment ou d'une structure en génie civil (50, 60, 70).

15. Utilisation d'au moins un appareil (10) selon l'une des revendications 1 à 13 sur ou dans la façade d'un nouveau bâtiment et/ou d'un bâtiment existant (80) comme élément additif sur une façade existante classique (82).

16. Système de façade (100) permettant de séparer un intérieur de bâtiment (dedans) I d'un espace extérieur (dehors) O, comportant un appareil (10) selon l'une des revendications 1 à 13, dans lequel le système de façade (100) est éventuellement construit en une ou plusieurs couches (104, 106, 108, 110) et/ou de manière modulaire.

17. Système de façade (100) selon la revendication 16, **caractérisé en ce que** du côté duquel la seconde couche textile (16) de l'élément textile (12) de l'appareil (10) est située, le système de façade (100) a au moins une couche de passage de flux de fluide (104, 108) et/ou une couche d'isolation (106) et/ou une couche interne (110) et/ou **caractérisé en ce que** deux couches de passage de flux de fluide (104, 108) sont fournies, dans lequel la première couche de passage de flux de fluide (104) est agencée d'un côté de la couche d'isolation (106) et la seconde couche de passage de flux de fluide (108) est agencée de l'autre côté de la couche d'isolation (106).

18. Système de façade (100) selon la revendication 17, **caractérisé en ce que** l'une des deux ou les deux couches de passage de flux de fluide (104, 108) sont configurées et destinées à servir de collecteur thermique et/ou utilisées comme un dispositif de contrôle de température des surfaces murales intérieures de bâtiment, comme un dispositif de régulation de l'humidité de l'air, comme un dispositif de régulation des propriétés d'isolation acoustique et phonique et/ou comme un dispositif de mesures actives de protection contre l'incendie.

19. Système de façade (100) selon l'une des revendications 16 à 18, **caractérisé en ce qu'**un autre appareil (10') selon l'une des revendications 1 à 13 est fourni, ledit autre appareil (10') formant une couche interne du système de façade, dans lequel la première couche (14') de l'élément textile (12') de l'autre appareil (10') fait face vers l'intérieur de bâtiment (dedans) I et/ou **caractérisé en ce que** le système de façade (100) comprend un système de profilé de préférence modulaire (102, 102') auquel les composants du système de façade (100) et/ou le dispositif de maintien de l'appareil (10) selon la revendication 10 et/ou le profilé de cadre (34, 34') de l'appareil (10) selon la revendication 11 sont attachés ou attachables.

20. Procédé d'activation d'un appareil (10) selon l'une des revendications 1 à 13 et/ou d'un système de façade (100) selon l'une des revendications 16 à 19 sur un bâtiment, **caractérisé en ce que** l'eau de précipitation est approvisionnée à une utilisation dans, sur ou à l'extérieur du bâtiment.

21. Procédé selon la revendication 20, **caractérisé en ce que** l'eau et/ou l'eau de précipitation est évacuée par le biais de l'élément textile (12) par évaporation, et/ou **caractérisé en ce que** l'eau de précipitation est approvisionnée au consommateur dans, sur ou à l'extérieur du bâtiment sous forme d'eau brute et/ou **en ce que** l'eau de précipitation est transformée en eau potable.

22. Procédé selon l'une des revendications 20 à 21, **caractérisé en ce que** l'eau de précipitation est utilisée pour le conditionnement intérieur de bâtiments en termes de régulation de température et d'humidité de l'air, pour la régulation des propriétés d'isolation acoustique et phonique et/ou pour des mesures actives de protection contre l'incendie et/ou **caractérisé en ce que** l'eau de précipitation est évacuée dans le réseau public d'approvisionnement en eau et/ou distribuée aux bâtiments et/ou structures de génie civil voisins, en particulier dans le cas de rendements excédentaires d'eau de précipitation.

23. Procédé de contrôle et/ou de régulation d'un appareil (10) selon l'une des revendications 1 à 13 et/ou d'un système de façade (100) selon l'une des revendications 16 à 19, le procédé comprenant les étapes suivantes:
- la récupération de données météorologiques prévisionnelles d'un service météorologique pour un laps de temps défini,
- l'estimation de la consommation d'eau potable, d'eau brute et/ou d'eaux grises dans, sur ou à l'extérieur d'un bâtiment ou d'une structure en génie civil pour le laps de temps défini au moyen d'une analyse de consommation d'eau dans, sur ou à l'extérieur du bâtiment ou de la structure en génie civil par le biais d'un débitmètre, et
- la comparaison de la consommation estimée d'eau potable, d'eau brute et/ou d'eaux grises avec des rendements attendus d'eau de précipitation à partir des données météorologiques prévisionnelles.

24. Procédé selon la revendication 23, **caractérisé par** la détermination de la quantité d'eau nécessaire au refroidissement évaporatif de la façade, de l'espace aérien proche de la façade et/ou de l'espace urbain et/ou **caractérisé par** la détermination de la quantité d'eau potable, d'eau brute et/ou d'eaux grises nécessaire dans, sur ou à l'extérieur du bâtiment ou de la structure en génie civil.

25. Procédé selon l'une des revendications 23 à 24, **caractérisé par** la détermination de la quantité d'eau nécessaire au conditionnement intérieur et/ou **caractérisé par** la détermination de la quantité d'eau nécessaire à l'utilisation de mesures actives de protection contre l'incendie spécifiques à l'installation.

26. Procédé selon l'une des revendications 23 à 25, **caractérisé par** la distribution de l'eau excédentaire vers des bâtiments ou structures en génie civil voisins et/ou par l'injection de l'eau excédentaire dans le réseau public d'approvisionnement en eau.
